(19) Europäisches Patentamt
European Patent Office
Office européen des brevets

(11) **EP 4 215 800 A1**

(12) **EUROPEAN PATENT APPLICATION**
published in accordance with Art. 153(4) EPC

(43) Date of publication:
**26.07.2023 Bulletin 2023/30**

(51) International Patent Classification (IPC):
**F17D 5/06** (2006.01)     **G01M 3/24** (2006.01)
**G06Q 50/10** (2012.01)     **G01S 19/01** (2010.01)

(21) Application number: **21869582.3**

(22) Date of filing: **26.08.2021**

(86) International application number:
**PCT/KR2021/011431**

(87) International publication number:
**WO 2022/059960 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.09.2020   KR 20200121434**

(71) Applicant: **Korea Research Institute of Standards
and Science
Daejeon 34113 (KR)**

(72) Inventors:
• **YOON, Dong Jin**
  **Daejeon 34140 (KR)**
• **PARK, Choon Su**
  **Daejeon 35245 (KR)**
• **LEE, Sun Ho**
  **Daejeon 34119 (KR)**

(74) Representative: **SONN Patentanwälte OG
Riemergasse 14
1010 Wien (AT)**

(54) **SYSTEM, DEVICE, AND METHOD FOR MONITORING ABNORMAL STATE OF PIPE**

(57)    The present invention relates to a system, device, and method for monitoring an abnormal state of pipe, which monitors whether a pipe is abnormal. In the present invention, a pipe state signal input from each signal acquisition part is divided into a plurality of time periods, and then it is determined whether an abnormal state signal exists in the pipe state signal in each of the time periods. Therefore, the present invention enables determination with higher accuracy of whether the pipe is abnormal, compared to the case of determining whether an abnormal state signal exists in a pipe state signal which has not been divided into a plurality of time periods.

FIG. 2

START

RECEIVE PIPE STATE SIGNAL FROM EACH OF PLURALITY OF SIGNAL ACQUISITION PARTS — S100

PERFORM TIME SYNCHRONIZATION BETWEEN PIPE STATE SIGNALS RECEIVED FROM RESPECTIVE SIGNAL ACQUISITION PARTS USING PIPE STATE SIGNALS MATCHED WITH GPS SIGNAL — S200

DIVIDE PIPE STATE SIGNAL RECEIVED FROM EACH SIGNAL ACQUISITION PART INTO PLURALITY OF PRESET TIME PERIODS — S300

IS ABNORMAL STATE SIGNAL PRESENT IN TWO PIPE STATE SIGNALS? — NO / YES — S400

DETERMINE THAT PIPE IS ABNORMAL

END

**EP 4 215 800 A1**

**Description**

[Technical Field]

The present invention relates to a system, device, and method for monitoring an abnormal state of pipe, which monitor whether the pipe is abnormal.

[Background Art]

Pipes are usually buried underground and are used to transfer water, gas, crude oil, and the like. As a pipe has been used for a long time, damage due to corrosion or the like may be applied to the pipe more and more. In addition, there may be numerous vibrations around an area where pipes are buried, and in particular, when another construction is performed in the area where the pipes are buried, there is a problem in that the pipes may be damaged due to vibrations caused by another construction.

Leakage of water, gas, crude oil, etc. from a pipe means that the pipe has already been damaged prior to the leakage. When damage is applied to a pipe, an abnormal state signal such as an elastic wave is generated at a point of the pipe at which the damage is applied. Accordingly, if the abnormal state signal generated in the pipe can be detected, it is possible to monitor in advance whether the pipe is abnormal before a leakage occurs in the pipe.

In Korean Patent Registration No. 10-1447928, a real-time remote leak detection system including a plurality of leak detection sensor nodes mounted on an underground pipe and at least one network node is disclosed.

Disclosure

Technical Problem

The present invention is directed to providing a system, device, and method for monitoring an abnormal state of pipe, which are capable of determining whether the pipe is abnormal with high accuracy.

The present invention is also directed to providing a system, device, and method for monitoring an abnormal state of pipe, which are capable of performing time synchronization between pipe state signals in order to determine whether the pipe is abnormal with high accuracy.

The present invention is also directed to providing a system, device, and method for monitoring an abnormal state of pipe, which are capable of determining whether an abnormal state signal is present in a pipe state signal without missing the abnormal state signal.

Technical Solution

One aspect of the present invention provides a system for monitoring an abnormal state of pipe which includes a plurality of sensor parts positioned at a distance apart from each other and each configured to detect a pipe state signal, which is a signal indicating a state of the pipe, a plurality of signal acquisition parts positioned at a distance apart from each other and each configured to acquire the pipe state signal detected by each sensor part, and a device for monitoring an abnormal state of pipe configured to monitor whether the pipe is abnormal, wherein the device for monitoring an abnormal state of pipe includes an input part that receives the pipe state signal from each of the plurality of signal acquisition parts, a signal division part that divides the pipe state signal input through the input part into a plurality of preset time periods, and a monitoring part that determines whether an abnormal state signal is present in each of the pipe state signals received from two signal acquisition parts among the plurality of signal acquisition parts in each of the plurality of time periods and when it is determined that the abnormal state signal is present in each of the pipe state signals received from the two signal acquisition parts, determines that the pipe is abnormal.

Here, each signal acquisition part may receive a Global Positioning System (GPS) signal through a GPS antenna and match the GPS signal with the pipe state signal detected by each sensor part, the input part may receive the pipe state signal matched with the GPS signal from each signal acquisition part, and the device for monitoring an abnormal state of pipe may further include a synchronization part that performs time synchronization between the pipe state signals received from the respective signal acquisition parts using the pipe state signal matched with the GPS signal.

The synchronization part may linearly interpolate the GPS signal and match the linearly interpolated GPS signal with the pipe state signal received from each signal acquisition part, and may perform time synchronization between the pipe state signals received from the respective signal acquisition parts further using the pipe state signal matched with the linearly interpolated GPS signal.

An overlapping time period may be present between the plurality of preset time periods.

The monitoring part may calculate a coherence function value representing a degree of similarity between the pipe state signals received from the two signal acquisition parts in each of the plurality of time periods, and when the coherence function value is greater than or equal to a coherence function reference value preset in the monitoring part, determine that the abnormal state signal is present in each of the pipe state signals received from the two signal acquisition parts.

The monitoring part may calculate a kurtosis function value of each of the pipe state signals received from the two signal acquisition parts in each of the plurality of time periods, and when each kurtosis function value is greater than a kurtosis function reference value preset in the monitoring part, determine that the abnormal state signal is present in each of the pipe state signals received from the two signal acquisition parts.

The monitoring part may calculate a kurtosis function value of each of the pipe state signals received from the two signal acquisition parts in each of the plurality of time periods, and when a geometric mean value of the respective kurtosis function values is greater than or equal to a kurtosis function geometric mean reference value preset in the monitoring part, determine that the abnormal state signal is present in each of the pipe state signals received from the two signal acquisition parts.

The monitoring part may calculate a coherence function value representing a degree of similarity between the pipe state signals received from the two signal acquisition parts in each of the plurality of time periods, calculate a kurtosis function value of each of the pipe state signals received from the two signal acquisition parts in each of the plurality of time periods, and when the coherence function value is greater than or equal to a coherence function reference value preset in the monitoring part and each kurtosis function value is greater than a kurtosis function reference value preset in the monitoring part, determine that the abnormal state signal is present in each of the pipe state signals received from the two signal acquisition parts.

The monitoring part may calculate a coherence function value representing a degree of similarity between the pipe state signals received from the two signal acquisition parts in each of the plurality of time periods, calculate a kurtosis function value of each of the pipe state signals received from the two signal acquisition parts in each of the plurality of time periods, and when the coherence function value is greater than or equal to a coherence function reference value preset in the monitoring part and a geometric mean value of the respective kurtosis function values is greater than or equal to a kurtosis function geometric mean reference value preset in the monitoring part, determine that the abnormal state signal is present in each of the pipe state signals received from the two signal acquisition parts.

Another aspect of the present invention provides a device for monitoring an abnormal state of pipe which includes an input part configured to receive a pipe state signal, which is a signal indicating a state of the pipe, from each of a plurality of signal acquisition parts, a signal division part configured to divide the pipe state signal input through the input part into a plurality of preset time periods, and a monitoring part configured to determine whether an abnormal state signal is present in each of the pipe state signals received from two signal acquisition parts among the plurality of signal acquisition parts in each of the plurality of time periods and when it is determined that the abnormal state signal is present in each of the pipe state signals received from the two signal acquisition parts, determine that the pipe is abnormal.

Here, each signal acquisition part may receive a GPS signal through a GPS antenna and match the GPS signal with the pipe state signal detected by each sensor part, the input part may receive the pipe state signal matched with the GPS signal from each signal acquisition part, and the device for monitoring an abnormal state of pipe may further include a synchronization part that performs time synchronization between the pipe state signals received from the respective signal acquisition parts using the pipe state signal matched with the GPS signal.

The synchronization part may linearly interpolate the GPS signal and match the linearly interpolated GPS signal with the pipe state signal received from each signal acquisition part, and may perform time synchronization between the pipe state signals received from the respective signal acquisition parts further using the pipe state signal matched with the linearly interpolated GPS signal.

An overlapping time period may be present between the plurality of preset time periods.

The monitoring part may calculate a coherence function value representing a degree of similarity between the pipe state signals received from the two signal acquisition parts in each of the plurality of time periods, and when the coherence function value is greater than or equal to a coherence function reference value preset in the monitoring part, determine that the abnormal state signal is present in each of the pipe state signals received from the two signal acquisition parts.

The monitoring part may calculate a kurtosis function value of each of the pipe state signals received from the two signal acquisition parts in each of the plurality of time periods, and when each kurtosis function value is greater than a kurtosis function reference value preset in the monitoring part, determine that the abnormal state signal is present in each of the pipe state signals received from the two signal acquisition parts.

The monitoring part may calculate a kurtosis function value of each of the pipe state signals received from the two signal acquisition parts in each of the plurality of time periods, and when a geometric mean value of the respective kurtosis function values is greater than or equal to a kurtosis function geometric mean reference value preset in the monitoring part, determine that the abnormal state signal is present in each of the pipe state signals received from the two signal acquisition parts.

The monitoring part may calculate a coherence function value representing a degree of similarity between the pipe state signals received from the two signal acquisition parts in each of the plurality of time periods, calculate a kurtosis function value of each of the pipe state signals received from the two signal acquisition parts in each of the plurality of time periods, and when the coherence function value is greater than or equal to a coherence function reference value preset in the monitoring part and each kurtosis function value is greater than a kurtosis function reference value preset in the monitoring part, determine that the abnormal state signal is present in each of the pipe state signals received from the two signal acquisition parts.

The monitoring part may calculate a coherence function value representing a degree of similarity between the pipe state signals received from the two signal acquisition parts in each of the plurality of time periods, calculate a kurtosis function value of each of the pipe state signals received from the two signal acquisition parts in each of the plurality of time periods, and when the coherence function value is greater than or equal to a coherence function reference value preset in the monitoring part and a geometric mean value of the respective kurtosis function values is greater than or equal to a kurtosis function geometric mean reference value preset in the monitoring part, determine that the abnormal state signal is present in each of the pipe state signals received from the two signal acquisition parts.

Another aspect of the present invention provides a method for monitoring an abnormal state of pipe which includes a signal inputting operation of receiving a pipe state signal, which is a signal indicating a state of the pipe, from each of a plurality of signal acquisition parts, a signal division operation of dividing the pipe state signal input through the signal inputting operation into a plurality of preset time periods, and a monitoring operation of determining whether an abnormal state signal is present in each of the pipe state signals received from two signal acquisition parts among the plurality of signal acquisition parts in each of the plurality of time periods and when it is determined that the abnormal state signal is present in each of the pipe state signals received from the two signal acquisition parts, determining that the pipe is abnormal.

Here, in the signal inputting operation, the pipe state signal matched with a GPS signal may be received from each signal acquisition part, and method for monitoring an abnormal state of pipe may further include, after the signal inputting operation and before the signal division operation, a synchronization operation of performing time synchronization between the pipe state signals received from the respective signal acquisition parts using the pipe state signal matched with the GPS signal.

In the synchronization operation, the GPS signal may be linearly interpolated and the linearly interpolated GPS signal may be matched with the pipe state signal received from each signal acquisition part, and the time synchronization may be performed between the pipe state signals received from the respective signal acquisition parts further using the pipe state signal matched with the linearly interpolated GPS signal.

An overlapping time period may be present between the plurality of preset time periods.

In the monitoring operation, a coherence function value representing a degree of similarity between the pipe state signals received from the two signal acquisition parts may be calculated in each of the plurality of time periods, and when the coherence function value is greater than or equal to a preset coherence function reference value, it may be determined that the abnormal state signal is present in each of the pipe state signals received from the two signal acquisition parts.

In the monitoring operation, a kurtosis function value of each of the pipe state signals received from the two signal acquisition parts may be calculated in each of the plurality of time periods, and when each kurtosis function value is greater than a preset kurtosis function reference value, it may be determined that the abnormal state signal is present in each of the pipe state signals received from the two signal acquisition parts.

In the monitoring operation, a kurtosis function value of each of the pipe state signals received from the two signal acquisition parts may be calculated in each of the plurality of time periods, and when each of a geometric mean value of the respective kurtosis function values is greater than or equal to a preset kurtosis function geometric mean reference value, it may be determined that the abnormal state signal is present in each of the pipe state signals received from the two signal acquisition parts.

In the monitoring operation, a coherence function value representing a degree of similarity between the pipe state signals received from the two signal acquisition parts may be calculated in each of the plurality of time periods, a kurtosis function value of each of the pipe state signals received from the two signal acquisition parts may be calculated in each of the plurality of time periods, and when the coherence function value is greater than or equal to a preset coherence function reference value and each kurtosis function value is greater than a preset kurtosis function reference value, it may be determined that the abnormal state signal is present in each of the pipe state signals received from the two signal acquisition parts.

In the monitoring operation, a coherence function value representing a degree of similarity between the pipe state signals received from the two signal acquisition parts may be calculated in each of the plurality of time periods, a kurtosis function value of each of the pipe state signals received from the two signal acquisition parts may be calculated in each of the plurality of time periods, and when the coherence function value is greater than or equal to a preset coherence function reference value and a geometric mean value of the respective kurtosis function values is greater than or equal to each of a preset kurtosis function geometric mean reference value, it may be determined that the abnormal state signal is present in each of the pipe state signals received from the two signal acquisition parts.

[Advantageous Effects]

Since the present invention is configured to divide a pipe state signal received from each of signal acquisition parts into a plurality of time periods and then determine whether an abnormal state signal is present in the pipe state signal in each time period, it is possible to determine whether a pipe is abnormal with higher accuracy, compared to determining whether an abnormal state signal is present in a pipe state signal in the case in which the pipe state signal has not been divided into a plurality of time periods.

Further, since the present invention is configured to perform time synchronization between the pipe state signals received from the respective signal acquisition parts using the pipe state signal matched with a Global Positioning System (GPS) signal, or furthermore, the pipe state signal matched with a linearly interpolated GPS signal, it is possible to determine whether a pipe is abnormal with higher accuracy, compared to the case in which time synchronization is not performed between the pipe state signals.

Further, in the present invention, since the pipe state signal received from each of the signal acquisition parts is divided into a plurality of time periods and an overlapping time period is present between the plurality of time periods, a concern about missing the abnormal state signal can be eliminated, and accordingly, it is possible to determine whether a pipe is abnormal with higher accuracy.

In addition, in the present invention, since it is determined whether a pipe is abnormal according to whether an abnormal state signal is present in each of pipe state signals received from two signal acquisition parts, it is possible to monitor in advance whether the pipe is damaged before a leakage occurs in the pipe, in addition to the case in which water, gas, crude oil, etc. leaks from the pipe.

Description of Drawings

FIG. 1 is a schematic diagram illustrating a system for monitoring an abnormal state of pipe according to an embodiment of the present invention.

FIG. 2 is a flowchart illustrating a method for monitoring an abnormal state of pipe performed by the device for monitoring an abnormal state of pipe illustrated in FIG. 1.

FIG. 3A is a graph showing a first Global Positioning System (GPS) signal before linear interpolation.

FIG. 3B is a graph showing a second GPS signal before linear interpolation.

FIG. 3C is a graph showing the first GPS signal after linear interpolation.

FIG. 3D is a graph showing the second GPS signal after linear interpolation.

FIG. 4 is a diagram for describing a state in which time synchronization is performed between pipe state signals using pipe state signals matched with linearly interpolated GPS signals.

FIG. 5 is a set of graphs showing examples of pipe state signals detected by sensor parts.

FIG. 6A is a set of graphs showing states in which a signal division part divides each of first and second pipe state signals of FIG. 5 into a time period of 0 to 1 second.

FIG. 6B is a set of graphs showing states in which the signal division part divides each of the first and second pipe state signals of FIG. 5 into a time period of 0.5 to 1.5 second.

FIG. 6C is a set of graphs showing states in which a signal division part divides each of the first and second pipe state signals of FIG. 5 into a time period of 1 to 2 second.

FIG. 7A is a set of graphs showing states in which a monitoring part calculates a cross power spectral density between the first and second pipe state signals of FIG. 6A and then calculates a coherence function value between the first and second pipe state signals of FIG. 6A using the calculated cross power spectral density.

FIG. 7B is a set of graphs showing states in which the monitoring part calculates a cross power spectral density between the first and second pipe state signals of FIG. 6B and then calculates a coherence function value between the first and second pipe state signals of FIG. 6B using the calculated cross power spectral density.

FIG. 7C is a set of graphs showing states in which the monitoring part calculates a cross power spectral density between the first and second pipe state signals of FIG. 6C and then calculates a coherence function value between the first and second pipe state signals of FIG. 6C using the calculated cross power spectral density.

FIG. 8A is a set of graphs showing states in which the monitoring part calculates a kurtosis function value of each of the first and second pipe state signals of FIG. 6A.

FIG. 8B is a set of graphs showing states in which the monitoring part calculates a kurtosis function value of each of the first and second pipe state signals of FIG. 6B.

FIG. 8C is a set of graphs showing states in which the monitoring part calculates a kurtosis function value of each of the first and second pipe state signals of FIG. 6C.

FIG. 9 is a graph showing coherence function values between the first and second pipe state signals of FIGS. 6A to 6C and geometric mean values of kurtosis function values of the first and second pipe state signals of FIGS. 6A to 6C.

Modes of the Invention

Hereinafter, a system, device, and method for monitoring an abnormal state of pipe according to the present invention will be described in detail with reference to the accompanying drawings. The accompanying drawings are provided by way of example in order to sufficiently convey the technical spirit of the present invention to those skilled in the art, and the present invention is not limited to the drawings presented below and may be embodied in other forms without limitation.

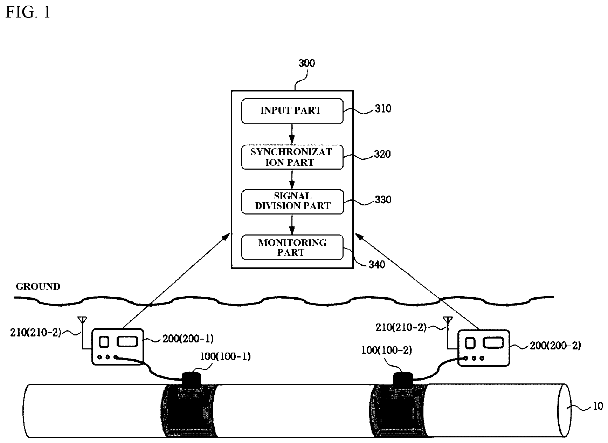

FIG. 1 is a schematic diagram illustrating a system for monitoring an abnormal state of pipe according to an embodiment of the present invention.

As illustrated in FIG. 1, the system for monitoring an abnormal state of pipe according to the embodiment of the present invention may include a plurality of sensor parts 100, a plurality of signal acquisition parts 200, and a device for monitoring an abnormal state of pipe 300.

The plurality of sensor parts 100 (100-1 and 100-2) are positioned at a distance apart from each other and each of the plurality of sensors detects a pipe state signal. Here, the pipe state signal is a signal indicating a state of a pipe 10, and more specifically, is a signal indicating whether an abnormality such as leakage and damage has occurred in the pipe 10.

For example, when an abnormality such as leakage and damage does not occur in the pipe 10, each of the sensor parts 100-1 and 100-2 detects only a fine-sized signal corresponding to noise as the pipe state signal. In contrast, when an abnormality occurs in the pipe 10, each of the sensor parts 100-1 and 100-2 detects, as the pipe state signal, an abnormal state signal having a greater signal magnitude than that of the noise, as well as the fine-sized signal corresponding to the noise.

Such an abnormal state signal usually appears in the form of a transient signal, and in the present invention, when an abnormal state signal in the form of a transient signal is present in each of any two pipe state signals among a plurality of pipe state signals detected by the respective sensor parts 100-1 and 100-2, it is determined that the pipe 10 is abnormal. Here, the fact that the abnormal state signal is present in each of any two pipe state signals among the plurality of pipe state signals means that an abnormality has occurred at a point at which any one sensor part of the two sensor parts that detect the two pipe state signals is positioned, or that an abnormality has occurred between points at which the two sensor parts are positioned.

Although only two sensor parts 100 are illustrated in FIG. 1, the number of sensor parts 100 may be two or more. Hereinafter, for convenience of description, the sensor part 100 positioned on the left side in FIG. 1 is referred to as a first sensor part 100-1, and the sensor part 100 positioned on the right side is referred to as a second sensor part 100-2. In addition, a pipe state signal detected by the first sensor part 100-1 is referred to as a first pipe state signal, and a pipe state signal detected by the second sensor part 100-2 is referred to as a second pipe state signal.

Further, although each of the sensor parts 100-1 and 100-2 is illustrated as being positioned on the pipe 10 in FIG. 1, each of the sensor parts 100-1 and 100-2 may be positioned in the pipe 10 or may be positioned at a certain distance apart from the pipe 10.

Furthermore, each of the sensor parts 100-1 and 100-2 may include at least one of a vibration accelerometer positioned on the pipe 10, a hydrophone positioned in the pipe 10, and a microphone positioned at a certain distance apart from the pipe 10. However, in addition, any sensor as long as it is a sensor capable of detecting the pipe state signal may correspond to the sensor part 100 according to the present invention.

When an abnormality such as leakage or damage occurs in the pipe 10, an elastic wave (i.e., an abnormal state signal) is generated at a point of the pipe 10 where an abnormality occurs, and the elastic wave is transmitted along a surface of the pipe 10 in a lateral direction of the pipe 10. When each of the sensor parts 100-1 and 100-2 includes a vibration accelerometer capable of detecting an elastic wave and a point of the pipe 10 where an abnormality occurs is positioned between the first sensor part 100-1 and the second sensor part 100-2, the first sensor part 100-1 and the second sensor part 100-2 detect fine-sized noise and the elastic wave as the pipe state signals. In contrast, when an abnormality does not occur in the pipe 10, the first sensor part 100-1 and the second sensor part 100-2 detect only the fine-sized noise as the pipe state signal.

A plurality of signal acquisition parts 200 (200-1 and 200-2) are positioned at a distance apart from each other, and each of the signal acquisition parts 200 acquires the pipe state signals detected by the respective sensor parts 100-1 and 100-2. In order for the signal acquisition parts 200-1 and 200-2 to acquire the pipe state signals from the sensor parts 100-1 and 100-2, respectively, the signal acquisition parts 200-1 and 200-2 may be connected to the sensor parts 100-1 and 100-2, respectively, through wired communication or wireless communication (e.g., WiFi or the like).

Although only two signal acquisition parts 200 are illustrated in FIG. 1, the number of signal acquisition parts 200 may be two or more. Hereinafter, for convenience of description, the signal acquisition part 200 positioned on the left side in FIG. 1 is referred to as a first signal acquisition part 200-1, and the signal acquisition part 200 positioned on the right side is referred to as a second signal acquisition part 200-2. The signal acquisition parts 200 may have a 1:1 correspondence relationship with the sensor parts 100. That is, the number of signal acquisition parts 200 may be identical to the number of sensor parts 100.

The first signal acquisition part 200-1 is connected to the first sensor part 100-1 to communicate with each other and acquires the first pipe state signal detected by the first sensor part 100-1. The second signal acquisition part 200-2 is connected to the second sensor part 100-2 to communicate with each other and acquires the second pipe state signal detected by the second sensor part 100-2. The first pipe state signal detected by the first sensor part 100-1 and the second pipe state signal detected by the second sensor part 100-2 may be analog signals. In this case, each of the first signal acquisition part 200-1 and the second signal acquisition part 200-2 may include an analog-digital converter (ADC) for converting an analog signal into a digital signal.

Further, the signal acquisition parts 200-1 and 200-2 may include Global Positioning System (GPS) antennas 210 (210-1 and 210-2) for receiving GPS signals, respectively. That is, the first signal acquisition part 200-1 may include a first GPS antenna 210-1 for receiving a GPS signal, and the second signal acquisition part 200-2 may also include a second GPS antenna 210-2 for receiving a GPS signal. Here, the GPS signal refers to a signal related to International Atomic Time (TAI) transmitted from a satellite every second, and is generally composed of 64 bits. Hereinafter, the GPS signal received through the first GPS antenna 210-1 is referred to as a first GPS signal, and the GPS signal received through the second GPS antenna 210-2 is referred to as a second GPS signal.

In this way, since the GPS antennas 210-1 and 210-2 are provided on the signal acquisition parts 200-1 and 200-2, respectively, the signal acquisition parts 200-1 and 200-2 may acquire the pipe state signals from the sensor parts 100-1 and 100-2 and also receive the GPS signals through the GPS antennas 210-1 and 210-2, respectively. That is, the first signal acquisition part 200-1 may acquire the first pipe state signal from the first sensor part 100-1 and receive the first GPS signal through the first GPS antenna 210-1. Further, the second signal acquisition part 200-2 may acquire the second pipe state signal from the second sensor part 100-2 and receive the second GPS signal through the second GPS antenna 210-2.

The signal acquisition parts 200-1 and 200-2 may match the GPS signals with the pipe state signals detected by the sensor parts 100-1 and 100-2, respectively.

More specifically, the first signal acquisition part 200-1 may match a first pipe state signal acquired from the first sensor part 100-1 at a specific time t with a first GPS signal received at the time t. Further, the first signal acquisition part 200-1 may match a first pipe state signal acquired from the first sensor part 100-1 at a time t+1 after 1 second has elapsed from the time t with a first GPS signal received at the time t+1.

Similarly, the second signal acquisition part 200-2 may match a second pipe state signal acquired from the second sensor part 100-2 at the specific time t with a second GPS signal received at the time t. Further, the second signal acquisition part 200-2 may match a second pipe state signal acquired from the second sensor part 100-2 at the time t+1 after 1 second has elapsed from the time t with the second GPS signal received at the time t+2.

Here, the reason why each of the signal acquisition parts 200-1 and 200-2 matches the pipe state signal with the GPS signal is that the device for monitoring an abnormal state of pipe 300, which will be described below, performs time synchronization between the first pipe state signal and the second pipe state signal and finally determines whether the pipe 10 is abnormal with high accuracy. A process in which the device for monitoring an abnormal state of pipe 300 performs the time synchronization will be described below.

The device for monitoring an abnormal state of pipe 300 (hereinafter, referred to as a "monitoring device") may include an input part 310, a signal division part 330, and a monitoring part 340, and additionally include a synchronization part 320 for time synchronization. The monitoring device 300 receives the first pipe state signal and the second pipe state signal from each of the signal acquisition parts 200-1 and 200-2 and monitors whether the pipe 10 is abnormal. In this case, the monitoring device 300 may be connected to each of the signal acquisition parts 200-1 and 200-2 through wireless communication (e.g., WiFi or the like) or through wired communication in some cases.

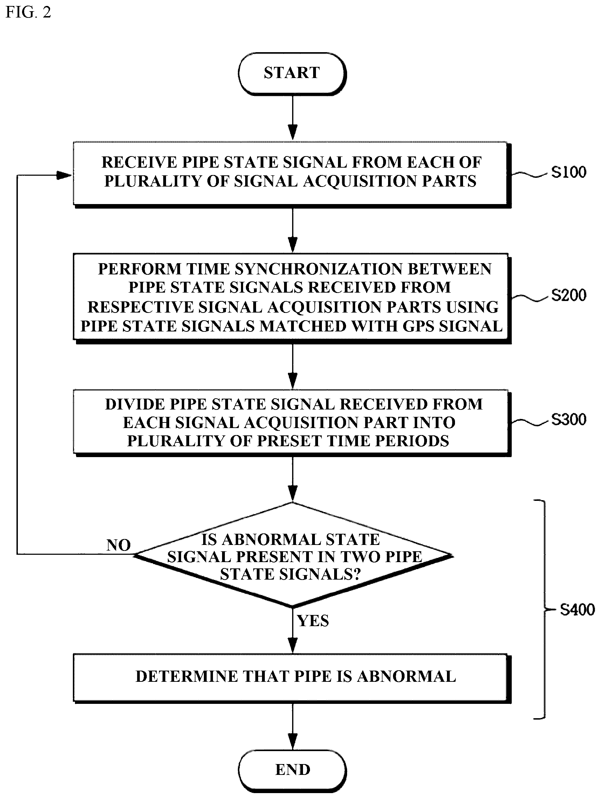

FIG. 2 is a flowchart illustrating a method for monitoring an abnormal state of pipe performed by the device for monitoring an abnormal state of pipe illustrated in FIG. 1. Hereinafter, the method for monitoring an abnormal state of pipe performed by the system and the device for monitoring an abnormal state of pipe according to the present invention will be described with further reference to FIG. 2.

In a method of monitoring an abnormal state of the pipe 10 according to the present invention, a signal inputting operation in which the input part 310 receives the pipe state signal, which is a signal indicating the state of the pipe 10, from each of the plurality of signal acquisition parts 200 may be first performed (S 100).

The input part 310 may be connected in communication with the first signal acquisition part 200-1, and accordingly, may receive the first pipe state signal detected by the first sensor part 100-1 from the first signal acquisition part 200-1. Further, the input part 310 may be connected in communication with the second signal acquisition part 200-2, and accordingly, may receive the second pipe state signal detected by the second sensor part 100-2 from the second signal acquisition part 200-2.

The monitoring device 300 may perform a signal division operation corresponding to operation S300 immediately after operation S100 is performed, but may perform operation S200 after operation S100 and then perform operation S300.

The GPS signals may be matched with some pipe state signals among the pipe state signals received by the input part 310 from the respective signal acquisition parts 200-1 and 200-2, as described above. That is, the input part 310 may receive the pipe state signals matched with the GPS signals and the pipe state signals not matched with the GPS signals from the respective signal acquisition parts 200-1 and 200-2.

Accordingly, after operation S 100, a synchronization operation in which the synchronization part 320 uses the pipe state signals matched with the GPS signal to perform time synchronization between the pipe state signals received from the respective signal acquisition parts 200-1 and 200-2 may be performed (S200). In this case, since the synchronization part 320 is connected in communication with the input part 310, the synchronization part 320 may use the pipe state signals input to the input part 310.

The synchronization part 320 may perform time synchronization between the first pipe state signal and the second pipe state signal by matching a first GPS time of the first pipe state signal received from the first signal acquisition part 200-1 with a second GPS time of the second pipe state signal received from the second signal acquisition part 200-2. When the time synchronization is performed between the first pipe state signal and the second pipe state signal, the first pipe state signal and the second pipe state signal may be divided into the same time period as will be described below, and thus whether the pipe 10 is abnormal may be determined with high accuracy.

However, the GPS signal is a signal related to TAI transmitted from a satellite every second, and each of the sensor parts 100-1 and 100-2 may detect, for example, 51,200 pipe state signals per second.

Accordingly, even when the first signal acquisition part 200-1 matches the first pipe state signal acquired from the first sensor part 100-1 at the time t with the first GPS signal received at the time t and matches the first pipe state signal acquired from the first sensor part 100-1 at the time t+1 with the first GPS signal received at the time t+1, there are much more first pipe state signals not matched with the first GPS signal than the first pipe state signal matched with the first GPS signal.

Similarly, even when the second signal acquisition part 200-2 matches the second pipe state signal acquired from the second sensor part 100-2 at the time t with the second GPS signal received at the time t and matches the second pipe state signal acquired from the second sensor part 100-2 at the time t+1 with the second GPS signal received at the time t+1, there are much more second pipe state signals not matched with the second GPS signal than the second pipe state signals matched with the second GPS signal.

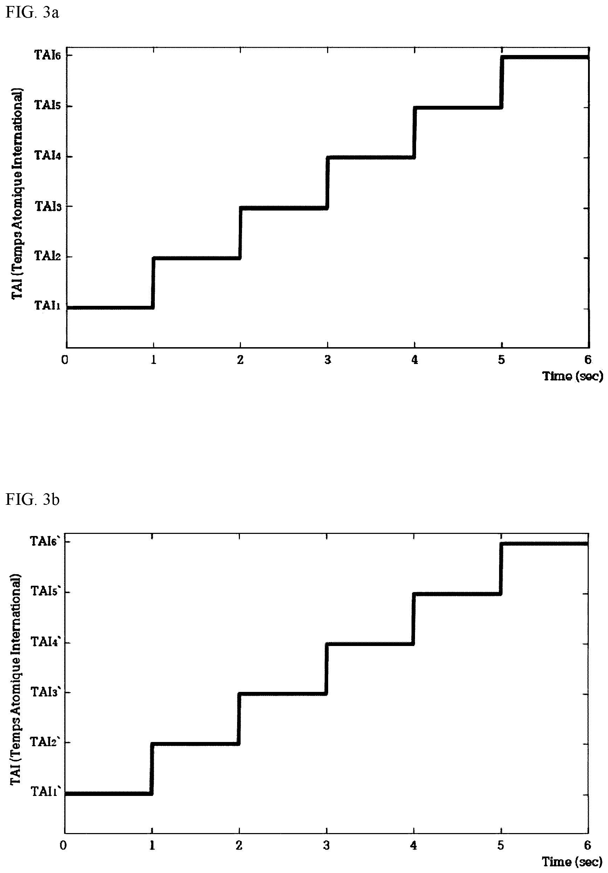

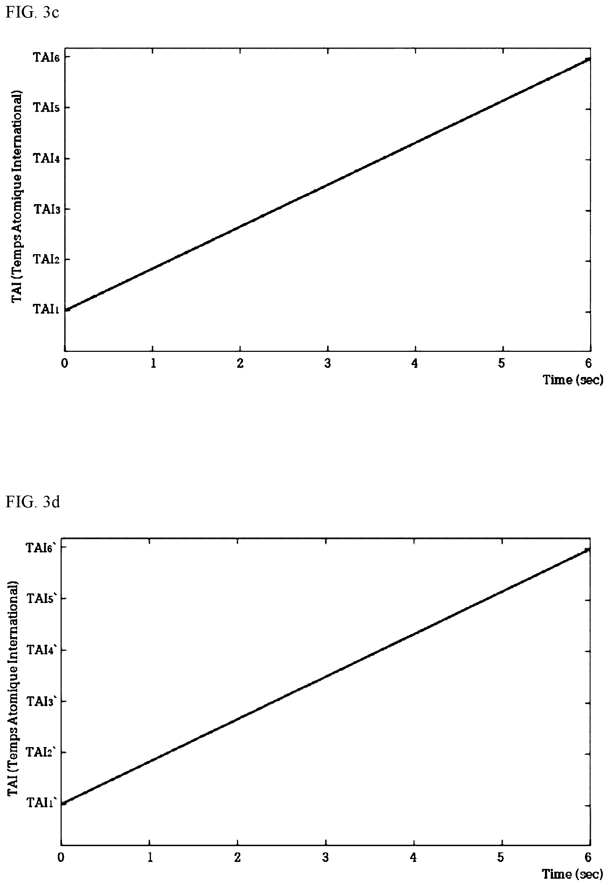

FIG. 3A is a graph showing a first GPS signal before linear interpolation, and FIG. 3B is a graph showing a second GPS signal before linear interpolation. FIG. 3C is a graph showing a first GPS signal after linear interpolation, and FIG. 3D is a graph showing a second GPS signal after linear interpolation. In FIGS. 3A to 3D, an x-axis represents a time, and a y-axis represents a GPS signal.

In a time period of more than 0 second and less than or equal to 1 second in FIG. 3A, the input part 310 may receive 51,200 first pipe state signals from the first signal acquisition part 200-1. In this case, when the first signal acquisition part 200-1 matches a first GPS signal $TAI_1$ with a first pipe state signal (i.e., $51,200^{th}$ first pipe state signal) acquired at a time point of 1 second, the input part 310 may receive the $51,200^{th}$ first pipe state signal matched with the first GPS signal $TAI_1$ from the first signal acquisition part 200-1.

Further, for example, in a time period of more than 5 second and less than or equal to 6 second in FIG. 3A, the input part 310 may receive 51,200 first pipe state signals from the first signal acquisition part 200-1. In this case, when the first signal acquisition part 200-1 matches a first GPS signal $TAI_6$ with a first pipe state signal (i.e., $(51,200 \times 6)^{th}$ first pipe state signal) acquired at a 6 second of time point, the input part 310 may receive the $(51,200 \times 6)^{th}$ first pipe state signal matched with the first GPS signal $TAI_6$ from the first signal acquisition part 200-1.

Similarly, in a time period of more than 0 second and less than or equal to 1 second in FIG. 3B, the input part 310 may receive 51,200 second pipe state signals from the second signal acquisition part 200-2. In this case, when the second signal acquisition part 200-2 matches a second GPS signal $TAI_{1'}$ with a second pipe state signal (i.e., $51,200^{th}$ second pipe state signal) acquired at a 1 second of time point, the input part 310 may receive the $51,200^{th}$ second pipe state signal matched with the second GPS signal $TAI_{1'}$ from the second signal acquisition part 200-2.

Further, for example, in a time period of more than 5 second and less than or equal to 6 second in FIG. 3B, the input part 310 may receive 51,200 second pipe state signals from the second signal acquisition part 200-2. In this case, when the second signal acquisition part 200-1 matches a second GPS signal $TAI_{6'}$ with a second pipe state signal (i.e., $(51,200 \times 6)^{th}$ second pipe state signal) acquired at 6 seconds of time point, the input part 310 may receive the $(51,200 \times 6)^{th}$ second pipe state signal matched with the second GPS signal $TAI_{6'}$ from the second signal acquisition part 200-1.

In this way, even when only some of the first pipe state signals are matched with the first GPS signal and only some of the second pipe state signals are matched with the second GPS signal, the synchronization part 320 may perform time synchronization between the first pipe state signal and the second pipe state signal. That is, in the above example, the synchronization part 320 may perform time synchronization on both the first pipe state signal and the second pipe state signal through a method of performing time synchronization between the first and second pipe state signals matched with the GPS signals. However, in this case, since there are a plurality of first and second pipe state signals not matched with the GPS signals, it may be difficult for the synchronization part 320 to accurately perform the time synchronization between the first pipe state signal and the second pipe state signal.

Accordingly, the synchronization part 320 may linearly interpolate the GPS signals and match the linearly interpolated GPS signals with the pipe state signals received from the respective signal acquisition parts 200-1 and 200-2. In this case, the synchronization part 320 may linearly interpolate the GPS signals using the GPS signals matched with some of the pipe state signals received from the respective signal acquisition parts 200-1 and 200-2.

For example, the synchronization part 320 may linearly interpolate the first GPS signal, as shown in FIG. 3C, using a method of connecting the coordinate (0 second, $TAI_1$) and the coordinate (6 second, $TAI_6$) in FIG. 3A with a straight line. Further, the synchronization part 320 may linearly interpolate the second GPS signal, as shown in FIG. 3D, using a method of connecting the coordinate (0 second, $TAI_{1'}$) and the coordinate (6 second, $TAI_{6'}$) in FIG. 3B with a straight line.

Thereafter, the synchronization part 320 may match the linearly interpolated GPS signals with the pipe state signals received from the respective signal acquisition parts 200-1 and 200-2. Specifically, the synchronization part 320 may match the first GPS signal linearly interpolated as shown in FIG. 3C with the (51,200×6) first pipe state signals received from the first signal acquisition part 200-1. Further, the synchronization part 320 may match the second GPS signal linearly interpolated as shown in FIG. 3D with the (51,200×6) the second pipe state signals received from the second signal acquisition part 200-2.

Thereafter, the synchronization part 320 may perform time synchronization between the pipe state signals received from the respective signal acquisition parts 200-1 and 200-2 using the pipe state signals matched with the linearly interpolated GPS signals.

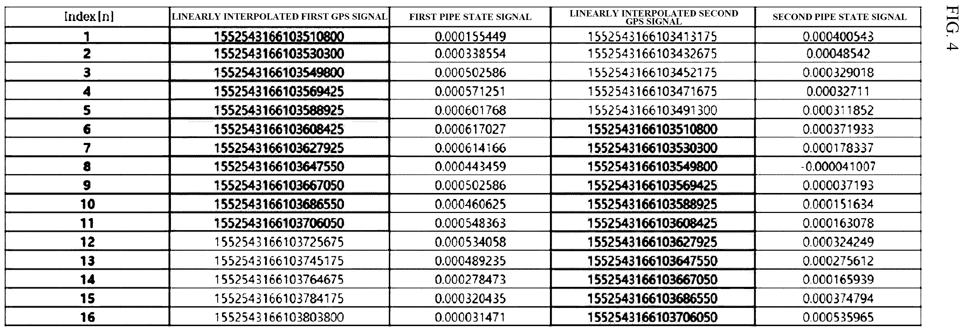

FIG. 4 is a diagram for describing a state in which time synchronization is performed between pipe state signals using pipe state signals matched with linearly interpolated GPS signals.

According to FIG. 4, it can be seen that a linearly interpolated first GPS signal of Index 1 and a linearly interpolated second GPS signal of Index 6 are identical to each other, and a linearly interpolated first GPS signal of Index 2 and a linearly interpolated second GPS signal of Index 7 are identical to each other. Accordingly, the synchronization part 320 may perform time synchronization between the first pipe state signal and the second pipe state signal using a method of corresponding the linearly interpolated first GPS signal of Index 1 to the linearly interpolated second GPS signal of Index 6 and corresponding the linearly interpolated first GPS signal of Index 2 to the linearly interpolated second GPS signal of Index 7.

After operation S200, the signal division operation in which the signal division part 330 divides the pipe state signal input through the input part 310 into a plurality of preset time periods may be performed (S300). Since the signal division part 330 is connected in communication with the input part 310 or the synchronization part 320, the signal division part 330 may use the pipe state signal input to the input part 310 or the pipe state signal on which time synchronization is performed by the synchronization part 320.

Since the 51,200 first pipe state signals and the 51,200 second pipe state signals are input to the input part 310 per second, it is required to divide the first and second pipe state signals into a plurality of time periods in order to determine whether the pipe 10 is abnormal with high accuracy.

Accordingly, the signal division part 330 may divide the first pipe state signal in, for example, units of 1 second, and may also divide the second pipe state signal in, for example, units of 1 second. Each of the first and second pipe state signals is divided into a plurality of time periods in units of 1 second in this way, and when it is determined whether an abnormal state signal is present in each of the first and second pipe state signals in each of the time periods, it is possible to determine whether the abnormal state signal is present in the pipe state signal with high accuracy.

As described above, since the elastic wave (i.e., abnormal state signal) generated when an abnormality occurs in the pipe 10 is transmitted in the lateral direction of the pipe 10, when the abnormality occurs in the pipe 10 between the first sensor part 100-1 and the second sensor part 100-2, the first sensor part 100-1 and the second sensor part 100-2 detect the elastic wave together with fine-sized noise as a pipe state signal. However, when the signal division part 330 divides the first and second pipe state signals in units of 1 second without overlapping, there may be cases in which the abnormality of the pipe 10 cannot be accurately determined.

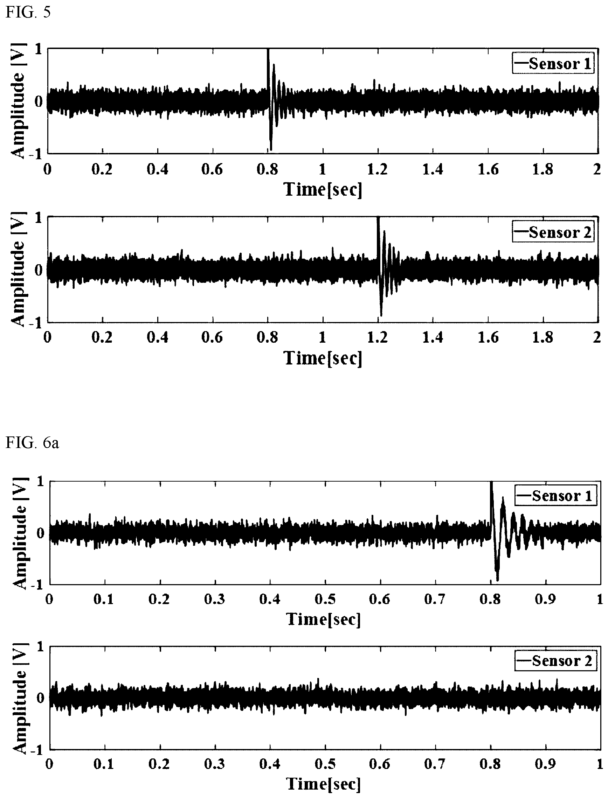

FIG. 5 is a set of graphs showing examples of pipe state signals detected by sensor parts. A graph related to "Sensor 1" shown at the top of FIG. 5 shows a first pipe state signal detected from 0 second to 2 second by the first sensor part 100-1, and a graph related to "Sensor 2" shown at the bottom of FIG. 5 shows a second pipe state signal detected from 0 second to 2 second by the second sensor part 100-2. In FIG. 5, an x-axis represents a time at which a signal is detected, and a y-axis represents an amplitude of the detected signal.

According to FIG. 5, it can be seen that an abnormal state signal reaches the second sensor part 100-2 about 0.4 seconds later than the first sensor part 100-1, and since an abnormal state signal in the form of a transient signal is present in each of the first and second pipe state signals in the time period of 0 to 2 seconds, it should be determined that the pipe 10 is abnormal. For reference, according to FIG. 5, it can be seen that a point of the pipe 10 at which the abnormal state signal is generated is present between a point at which the first sensor part 100-1 is positioned and a point at which the second sensor part 100-2 is positioned, but the point of the pipe 10 at which the abnormal state signal is generated is more biased toward the point at which the first sensor part 100-1 is positioned.

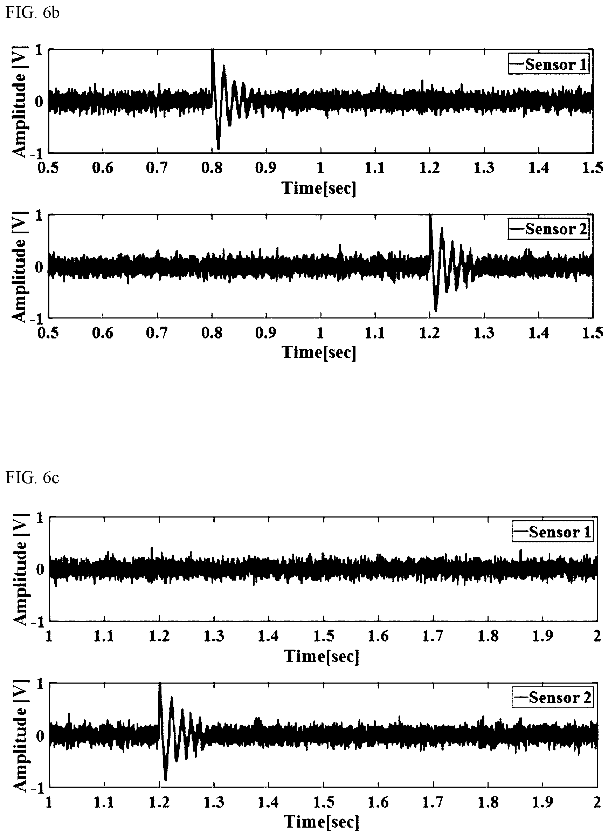

FIG. 6 is a set of graphs showing states in which the signal division part divides each of the pipe state signals of FIG. 5 into a plurality of time periods in units of 1 second, and according to FIGS. 6A and 6C, it is shown that when the signal division part 330 divides each of the first and second pipe state signals in units of 1 second without overlapping, the abnormality of the pipe 10 cannot be accurately determined.

More specifically, FIG. 6A is a set of graphs showing states in which the signal division part 330 divides each of the first and second pipe state signals of FIG. 5 into a time period of 0 to 1 second, and FIG. 6C is a set of graphs showing states in which the signal division part 330 divides each of the first and second pipe state signals of FIG. 5 into a time period of 1 to 2 second. That is, FIGS. 6A and 6C are graphs showing states in which the signal division part 330 divides each of the first and second pipe state signals detected from 0 second to 2 second without overlapping of time periods.

According to FIG. 6A, since an abnormal state signal is present in the first pipe state signal but is not present in the second pipe state signal in the time period of 0 to 1 second, the monitoring part 340, which will be described below, does not determine that the pipe 10 is abnormal. Further, according to FIG. 6C, since an abnormal state signal is present in the second pipe state signal but is not present in the first pipe state signal in the time period of 1 to 2 second, the monitoring part 340 which will be described below does not determine that the pipe 10 is abnormal.

Accordingly, in operation S300, the signal division part 330 divides the pipe state signal into the plurality of preset time periods, but it is preferable that overlapping time periods be present between the plurality of time periods.

FIG. 6B is a set of graphs showing states in which the signal division part 330 divides each of the first and second pipe state signals of FIG. 5 into a time period of 0.5 to 1.5 second, and in FIG. 6B, an overlapping time period of 0.5 to 1 second is present in relation to FIG. 6A, and an overlapping time period of 1 to 1.5 second is present in relation to FIG. 6C.

According to FIG. 6B, since abnormal state signals are present in both the first pipe state signal and the second pipe state signal in the time period of 0.5 to 1.5 second, the monitoring part 340 may determine that the pipe 10 is abnormal. In this way, when the signal division part 330 divides each of the first pipe state signal and the second pipe state signal into a plurality of time periods so that an overlapping time period is present between the plurality of time periods, since it is impossible to determine whether the pipe 10 is abnormal without missing the abnormal state signal, the accuracy of determination of whether the pipe 10 is abnormal may be increased. Meanwhile, the plurality of time periods required to divide the pipe state signal may be preset in the signal division part 330.

After operation S300, a monitoring operation in which the monitoring part 340 determines whether an abnormal state signal is present in each of the pipe state signals (e.g., first and second pipe state signals) received from any two signal acquisition parts 200-1 and 200-2 among the plurality of signal acquisition parts 200 in each of the plurality of time periods, and when it is determined that the abnormal state signal is present in each of the pipe state signals (e.g., first and second pipe state signals) received from the two signal acquisition parts 200-1 and 200-2, determines that the pipe 10 is abnormal may be performed (S400). In this case, since the monitoring part 340 is connected in communication with the signal division part 330, the monitoring part 340 may determine whether the abnormal state signal is present in the pipe state signal in each of the plurality of time periods divided by the signal division part 330.

Meanwhile, as a result of the determination performed by the monitoring part 340, when the abnormal state signal is not present in the pipe state signals (e.g., first and second pipe state signals) received from any two signal acquisition parts 200-1 and 200-2 among the plurality of signal acquisition parts 200 in each of the plurality of time periods, operation S 100 may be reperformed.

The monitoring part 340 may determine whether the abnormal state signal is present in each of the pipe state signals received from any two signal acquisition parts 200-1 and 200-2 among the plurality of signal acquisition parts 200 in each of the plurality of time periods using a coherence function. Here, the coherence function is a function representing a degree of similarity between two signals.

A coherence function value Coherence may be calculated from the coherence function and may be present within a range of 0 and 1.

When abnormal state signals caused by the same source are present in the first and second pipe state signals detected by the first sensor part 100-1 and the second sensor part 100-2, a degree of similarity between the first and second pipe state signals may be high, and thus the coherence function value may also be large (i.e., the coherence function value is close to 1).

In contrast, when abnormal state signals caused by the same source are not present in the first and second pipe state signals detected by the first sensor part 100-1 and the second sensor part 100-2, the degree of similarity between the first and second pipe state signals may be low, and thus the coherence function value may also be small (i.e., the coherence function value is close to 0).

In this way, since the coherence function value can inform with relatively high accuracy whether the abnormal state signals caused by the same source are present in both two pipe state signals, the monitoring part 340 may utilize the coherence function value as a reference for determining whether the pipe 10 is abnormal with high accuracy.

The monitoring part 340 may calculate the coherence function value representing the degree of similarity between the first and second pipe state signals received from any two signal acquisition parts 200-1 and 200-2 among the plurality of signal acquisition parts 200 in each of the plurality of time periods (e.g., 0 to 1 second, 0.5 to 1.5 second, 1 to 2 second, 1.5 to 2.5 second, etc.).

For example, the monitoring part 340 may first calculate a coherence function Cxy(f) between the first and second pipe state signals in each of the plurality of time periods (e.g., 0 to 1 second, 0.5 to 1.5 seconds, 1 to 2 seconds, 1.5 to 2.5 seconds, etc.) through Equation 1 below.

Equation 1

$$C_{xy}(f) = \frac{|G_{xy}(f)|^2}{G_{xx}(f)G_{yy}(f)}$$

In Equation 1, Gxx(f) denotes an auto power spectral density of the first pipe state signal, Gyy(f) denotes an auto power spectral density of the second pipe state signal, and Gxy(f) denotes a cross power spectral density between the first and second pipe state signals.

The monitoring part 340 may calculate the auto power spectral density Gxx(f) of the first pipe state signal and the auto power spectral density Gyy(f) of the second pipe state signal in the time period of 0 to 1 second shown in FIG. 6A.

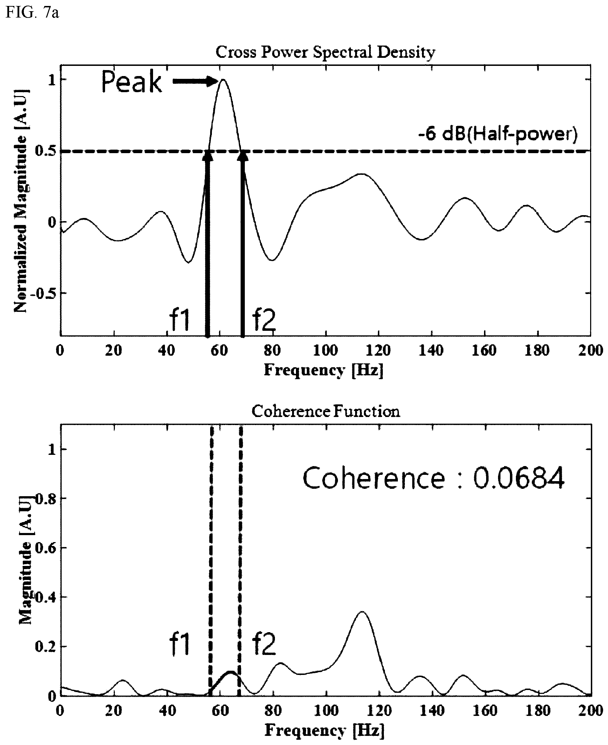

Further, the monitoring part 340 may calculate the cross power spectral density Gxy(f) between the first and second pipe state signals in the time period of 0 to 1 second shown in FIG. 6A. A graph shown at the top of FIG. 7A shows a state in which the monitoring part 340 calculates the cross power spectral density Gxy(f) between the first and second pipe state signals of FIG. 6A.

After the monitoring part 340 calculates Gxx(f), Gyy(f), and Gxy(f), the monitoring part 340 may calculate the coherence function Cxy(f) between the first and second pipe state signals in the time period of 0 to 1 second by substituting the calculated Gxx(f), Gyy(f), and Gxy(f) into Equation 1 above. A graph shown at the bottom of FIG. 7A shows a state in which the monitoring part 340 calculates the coherence function Cxy(f) between the first and second pipe state signals shown in FIG. 6A.

Thereafter, the monitoring part 340 may calculate the coherence function value Coherence representing the degree of similarity between the first and second pipe state signals from the coherence function Cxy(f) between the first and second pipe state signals. In this case, the monitoring part 340 may calculate the coherence function value Coherence through Equation 2 below.

Equation 2

$$Coherence = \frac{1}{f2 - f1} \sum_{f = f1}^{f2} C_{xy}(f)$$

In Equation 2, f1 and f2 denote frequencies corresponding to half (see "Half power" in graph shown at the top of FIG. 7A) of peak power of Gxy(f). Here, the half of the peak power of Gxy(f) may correspond to -6dB power of the peak power.

As shown in Equation 2, the monitoring part 340 may calculate the coherence function value Coherence representing the degree of similarity between the first and second pipe state signals in the time period of 0 to 1 second shown in FIG. 6A by summing the magnitudes of the coherence functions in a range of the frequencies from f1 to f2 (see a range of frequencies from f1 to f2 shown at the bottom of FIG. 7A). In the example of the graph shown at the bottom of FIG. 7A, the coherence function value Coherence calculated by the monitoring part 340 is 0.0684, and represents a value very close to 0. This is because the degree of similarity between the first and second pipe state signals is very low because the abnormal state signal is present only in the first pipe state signal but the abnormal state signal is not present in the second pipe state signal in the time period of 0 to 1 second as shown in FIG. 6A.

Next, the monitoring part 340 may calculate the auto power spectral density Gxx(f) of the first pipe state signal and the auto power spectral density Gyy(f) of the second pipe state signal in the time period of 0.5 to 1.5 second shown in FIG. 6B.

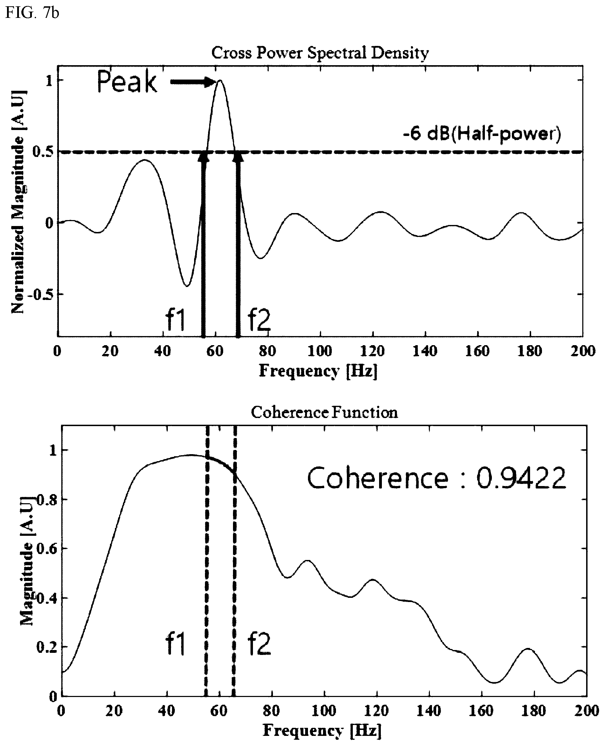

Further, the monitoring part 340 may calculate the cross power spectral density Gxy(f) between the first and second pipe state signals in the time period of 0.5 to 1.5 second shown in FIG. 6B. A graph shown at the top of FIG. 7B shows a state in which the monitoring part 340 calculates the cross power spectral density Gxy(f) between the first and second pipe state signals shown in FIG. 6B.

After the monitoring part 340 calculates Gxx(f), Gyy(f), and Gxy(f), the monitoring part 340 may calculate the coherence function Cxy(f) between the first and second pipe state signals in the time period of 0.5 to 1.5 second by substituting the calculated Gxx(f), Gyy(f), and Gxy(f) into Equation 1 as described above. A graph shown at the bottom of FIG. 7B shows a state in which the monitoring part 340 calculates the coherence function Cxy(f) between the first and second pipe state signals shown in FIG. 6B.

Thereafter, the monitoring part 340 may calculate the coherence function value Coherence between the first and second pipe state signals in the time period of 0.5 to 1.5 second through Equation 2 above. Here, the monitoring part 340 may use frequencies f1 and f2 corresponding to half of the peak power of Gxy(f) shown at the top of FIG. 7B.

The monitoring part 340 may calculate the coherence function value Coherence representing the degree of similarity between the first and second pipe state signals in the time period of 0.5 to 1.5 second shown in FIG. 6B by summing the magnitudes of the coherence functions in a range of the frequencies from f1 to f2 (see a range of frequencies from f1 to f2 shown at the bottom of FIG. 7B). In the example of the graph shown at the bottom of FIG. 7B, the coherence function value Coherence calculated by the monitoring part 340 is 0.9422, and represents a value very close to 1. This is because the degree of similarity between the first and second pipe state signals is very high because the abnormal state signals caused by the same source are present in the first and second pipe state signals in the time period of 0.5 to 1.5 second as shown in FIG. 6B.

Next, the monitoring part 340 may calculate the auto power spectral density Gxx(f) of the first pipe state signal and the auto power spectral density Gyy(f) of the second pipe state signal in the time period of 1 to 2 second shown in FIG. 6C.

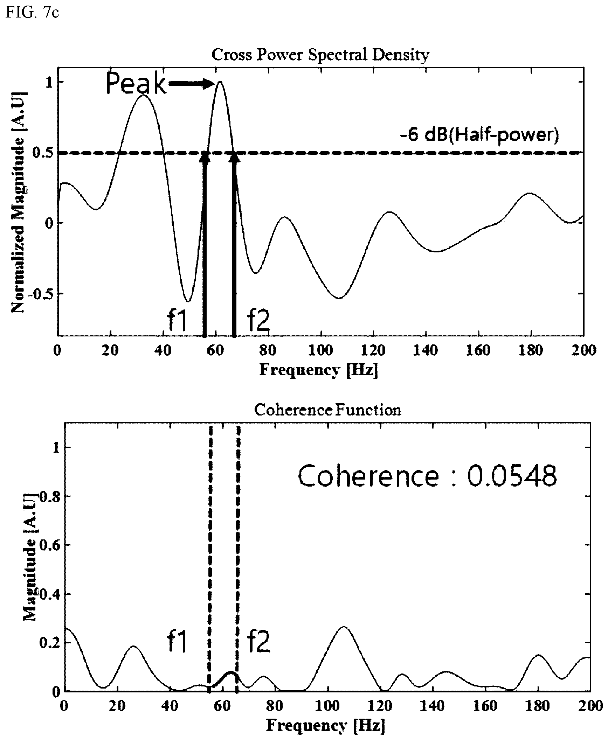

Further, the monitoring part 340 may calculate the cross power spectral density Gxy(f) between the first and second pipe state signals in the time period of 1 to 2 seconds shown in FIG. 6C. A graph shown at the top of FIG. 7C shows a state in which the monitoring part 340 calculates the cross power spectral density Gxy(f) between the first and second pipe state signals shown in FIG. 6C.

After the monitoring part 340 calculates Gxx(f), Gyy(f), and Gxy(f), the monitoring part 340 may calculate the coherence function Cxy(f) between the first and second pipe state signals in the time period of 1 to 2 second by substituting the calculated Gxx(f), Gyy(f), and Gxy(f) into Equation 1 above. A graph shown at the bottom of FIG. 7C shows a state in which the monitoring part 340 calculates the coherence function Cxy(f) between the first and second pipe state signals shown in FIG. 6C.

Thereafter, the monitoring part 340 may calculate the coherence function value Coherence between the first and second pipe state signals in the time period of 1 to 2 second through Equation 2 above. Here, the monitoring part 340 may use frequencies f1 and f2 corresponding to half of the peak power of Gxy(f) shown at the top of FIG. 7C.

The monitoring part 340 may calculate the coherence function value Coherence representing the degree of similarity between the first and second pipe state signals in the time period of 1 to 2 second shown in FIG. 6C by summing the magnitudes of the coherence functions in a range of the frequencies from f1 to f2 (see a range of frequencies from f1 to f2 shown at the bottom of FIG. 7C). In the example of the graph shown at the bottom of FIG. 7C, the coherence function value Coherence calculated by the monitoring part 340 is 0.0548, and represents a value very close to 0. This is because the degree of similarity between the first and second pipe state signals is very low because the abnormal state signal is present only in the second pipe state signal but the abnormal state signal is not present in the first pipe state signal in the time period of 1 to 2 second as shown in FIG. 6C.

A coherence function reference value may be preset in the monitoring part 340. Here, the coherence function reference value may be a minimum value of the coherence function values that can be calculated when the first sensor part 100-1 and the second sensor part 100-2 detect the abnormal state signals caused by the same source. Typically, when a correlation between two signals is greater than 70%, the two signals are regarded as being correlated. Accordingly, 0.7 may be preset as the coherence function reference value in the monitoring part 340.

The monitoring part 340 may compare the coherence function value with the coherence function reference value preset in the monitoring part 340.

As a result of the comparison performed by the monitoring part 340, when the coherence function value is less than the preset coherence function reference value (i.e., Coherence<0.7), it may be determined that the abnormal state signal is not present in the first and second pipe state signals received from the two signal acquisition parts 200-1 and 200-2. In the above example, in the cases of FIGS. 7A and 7C, the monitoring part 340 may determine that the abnormal state signal is not present in the first and second pipe state signals.

In contrast, as the result of the comparison performed by the monitoring part 340, when the coherence function value is greater than or equal to the preset coherence function reference value (i.e., Coherence≥0.7), it may be determined that the abnormal state signal is present in each of the first and second pipe state signals received from the two signal acquisition parts 200-1 and 200-2. In the above example, in the case of FIG. 7B, the monitoring part 340 may determine that the abnormal state signal is present in each of the first and second pipe state signals.

Meanwhile, the monitoring part 340 may determine whether the abnormal state signal is present in each of the pipe state signals received from any two signal acquisition parts 200-1 and 200-2 among the plurality of signal acquisition parts 200 in each of the plurality of time periods using a kurtosis function. Here, the kurtosis function is a function representing a statistical distribution of signals and a degree of sharpness of the statistical distribution, and is used to determine whether counted values are concentrated in the center.

A kurtosis function value Kurt may be calculated from the kurtosis function, and when the kurtosis function value Kurt is close to 3, the statistical distribution of the signals is close to a normal distribution. Further, when the kurtosis function value Kurt is less than 3 (Kurt<3), the statistical distribution of the signals represents a gentler distribution than the normal distribution, and when the kurtosis function value Kurt is greater than 3 (Kurt > 3), the statistical distribution of the signals represents a sharper distribution than the normal distribution.

When the abnormal state signal is present in each of the pipe state signals detected by the sensor parts 100-1 and 100-2, the kurtosis function value may be large (i.e., the kurtosis function value may be greater than 3) because the statistical distribution of the pipe state signal may not be evenly throughout.

In contrast, when the abnormal state signal is not present in the pipe state signals detected by the sensor parts 100-1 and 100-2 (i.e., only noise is present in the pipe state signal), the kurtosis function value may be small (i.e., the kurtosis function value may be less than or equal to 3) because the statistical distribution of the pipe state signals may be evenly throughout.

In this way, since the kurtosis function value can inform with relatively high accuracy whether both noise and abnormal state signals are present in the pipe state signals or whether only noise is present in the pipe state signals, the monitoring part 340 may utilize the kurtosis function value as a reference for determining whether the pipe 10 is abnormal with high accuracy.

the monitoring part 340 may calculate the kurtosis function value of each of the first and second pipe state signals received from any two signal acquisition parts 200-1 and 200-2 among the plurality of signal acquisition parts 200 in each of a plurality of time periods (e.g., 0 to 1 second, 0.5 to 1.5 second, 1 to 2 seconds, 1.5 to 2.5 second, etc.).

For example, the monitoring part 340 may calculate the kurtosis function value Kurt of each of the first and second pipe state signals in each of the plurality of time periods (e.g., 0 to 1 second, 0.5 to 1.5 second, 1 to 2 second, 1.5 to 2.5 second, etc.) through Equation 3 below.

Equation 3

$$ Kurt = \frac{\dfrac{\sum\limits_{i=1}^{n}(x_i - \overline{x})^4}{n}}{\left(\dfrac{\sum\limits_{i=1}^{n}(x_i - \overline{x})^2}{n}\right)^2} $$

In Equation 3, n denotes the number (e.g., 51,200) of all signals counted in each time period, $x_i$ denotes an amplitude of an $i^{th}$ signal among all the signals counted in each time period, and $\overline{x}$ denotes a mean value of the amplitudes of all the signals counted in each time period. Hereinafter, the kurtosis function value of the first pipe state signal calculated by the monitoring part 340 through Equation 3 above is referred to as Kurtx, and the kurtosis function value of the second pipe state signal is referred to as Kurty.

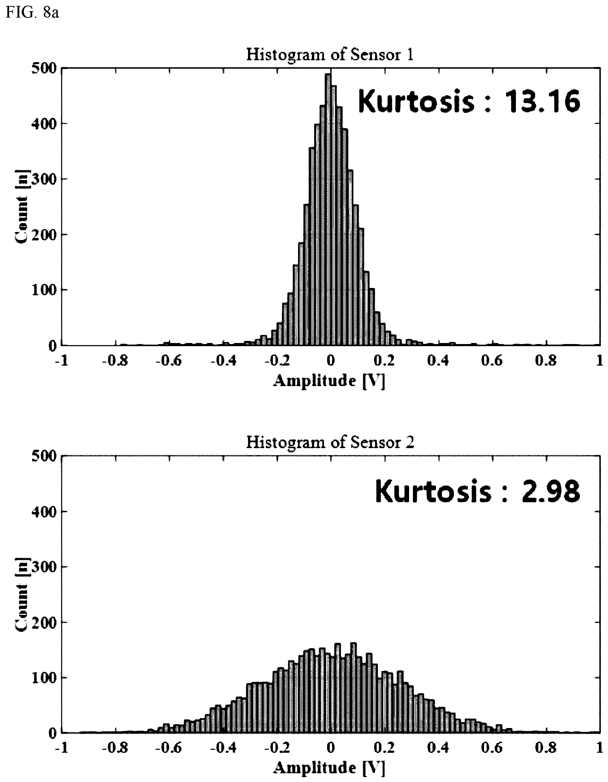

The monitoring part 340 may calculate the kurtosis function value Kurtx of the first pipe state signal in the time period of 0 to 1 second shown in FIG. 6A. A graph shown at the top of FIG. 8A shows a state in which the monitoring part 340 calculates the kurtosis function value Kurtx of the first pipe state signal of FIG. 6A, and the kurtosis function value Kurtx of the first pipe state signal calculated by the monitoring part 340 through Equation 3 above is 13.16.

Further, the monitoring part 340 may calculate the kurtosis function value Kurty of the second pipe state signal in the time period of 0 to 1 second shown in FIG. 6A. A graph shown at the bottom of FIG. 8A shows a state in which the monitoring part 340 calculates the kurtosis function value Kurty of the second pipe state signal of FIG. 6A, and the kurtosis function value of the second pipe state signal Kurtx calculated by the monitoring part 340 through Equation 3 above is 2.98.

In this way, the reason why the kurtosis function value Kurtx of the first pipe state signal of FIG. 6A is relatively large and the kurtosis function value Kurty of the second pipe state signal of FIG. 6A is relatively small is that the abnormal state signal is present only in the first pipe state signal and only noise is present in the second pipe state signal but the abnormal state signal is not present in the second pipe state signal in the time period between 0 and 1 second.

A kurtosis function reference value may be preset in the monitoring part 340. Here, the kurtosis function reference value may be a kurtosis function value that can be calculated when the sensor parts 100-1 and 100-2 detect only noise. That is, when only noise is present in a certain signal, the noise exhibits a white Gaussian distribution, and thus the statistical distribution of the signals may be close to the normal distribution. According to this, when only noise is present in the pipe state signal, the pipe state signal is close to the normal distribution, and thus the kurtosis function value of the pipe state signal in which only noise is present is about 3. Accordingly, 3 may be preset as the kurtosis function reference value in the monitoring part 340.

The monitoring part 340 may compare the kurtosis function value of each of the first and second pipe state signals with the kurtosis function reference value. Referring to FIG. 8A, the monitoring part 340 may compare the kurtosis function value, 13.16, of the first pipe state signal with the kurtosis function reference value, 3, and compare the kurtosis function value, 2.98, of the second pipe state signal with the kurtosis function reference value, 3.

As a result of the comparison performed by the monitoring part 340, when both the kurtosis function values of the first and second pipe state signals are greater than the kurtosis function reference value, the monitoring part 340 may determine that the abnormal state signal is present in each of the first and second pipe state signals received from the two signal acquisition parts 200-1 and 200-2. In contrast, as the result of the comparison performed by the monitoring part 340, when both the kurtosis function values of the first and second pipe state signals are not greater than the kurtosis function reference value, the monitoring part 340 may determine that the abnormal state signal is not present in the first and second pipe state signals received from the two signal acquisition parts 200-1 and 200-2.

In the case of FIG. 8A, as the result of the comparison performed by the monitoring part 340, the kurtosis function value of the first pipe state signal is greater than the kurtosis function reference value but the kurtosis function value of the second pipe state signal is less than the kurtosis function reference value, and thus the monitoring part 340 may determine that the abnormal state signal is not present in the first and second pipe state signals received from the two signal acquisition parts 200-1 and 200-2.

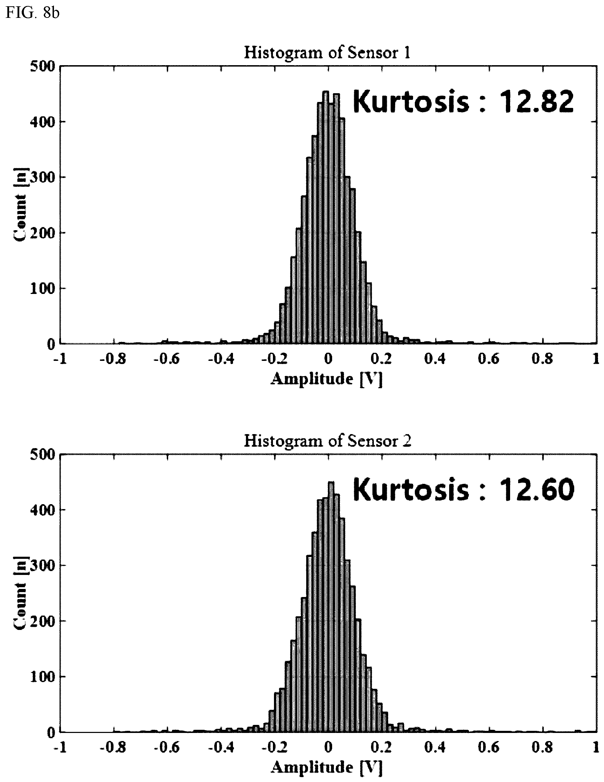

Similarly, the monitoring part 340 may calculate the kurtosis function value Kurtx of the first pipe state signal in the time period of 0.5 to 1.5 second shown in FIG. 6B. A graph shown at the top of FIG. 8B shows a state in which the monitoring part 340 calculates the kurtosis function value Kurtx of the first pipe state signal of FIG. 6B, and the kurtosis function value Kurtx of the first pipe state signal calculated by the monitoring part 340 through Equation 3 above is 12.82.

Further, the monitoring part 340 may calculate the kurtosis function value Kurty of the second pipe state signal in the time period of 0.5 to 1.5 second shown in FIG. 6B. A graph shown at the bottom of FIG. 8B shows a state in which the monitoring part 340 calculates the kurtosis function value Kurty of the second pipe state signal of FIG. 6B, and the kurtosis function value of the second pipe state signal Kurtx calculated by the monitoring part 340 through Equation 3 above is 12.60.

In this way, the reason why the kurtosis function value Kurtx of the first pipe state signal of FIG. 6B and the kurtosis function value Kurty of the second pipe state signal of FIG. 6B are relatively large is that the abnormal state signals are present in both the first and second pipe state signals in the time period between 0.5 and 1.5 second.

The monitoring part 340 may compare the kurtosis function value of each of the first and second pipe state signals with the kurtosis function reference value. Referring to FIG. 8A, the monitoring part 340 may compare the kurtosis function value, 12.82, of the first pipe state signal with the kurtosis function reference value. 3, and compare the kurtosis function value, 12.60, of the second pipe state signal with the kurtosis function reference value, 3.

As a result of the comparison performed by the monitoring part 340, both the kurtosis function values of the first and second pipe state signals are greater than the kurtosis function reference value, and thus the monitoring part 340 may determine that the abnormal state signal is present in each of the first and second pipe state signals received from the two signal acquisition parts 200-1 and 200-2.

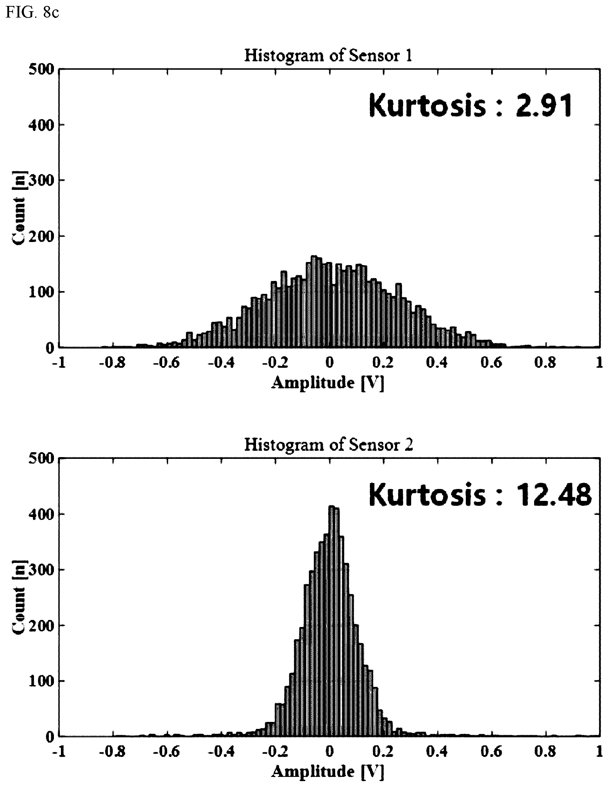

Further, the monitoring part 340 may calculate the kurtosis function value Kurtx of the first pipe state signal in the time period of 1 to 2 second shown in FIG. 6C. A graph shown at the top of FIG. 8C shows a state in which the monitoring part 340 calculates the kurtosis function value Kurtx of the first pipe state signal of FIG. 6C, and the kurtosis function value Kurtx of the first pipe state signal calculated by the monitoring part 340 through Equation 3 above is 2.91.

Further, the monitoring part 340 may calculate the kurtosis function value Kurty of the second pipe state signal in the time period of 1 to 2 second shown in FIG. 6C. A graph shown at the bottom of FIG. 8C shows a state in which the monitoring part 340 calculates the kurtosis function value Kurty of the second pipe state signal of FIG. 6C, and the kurtosis function value of the second pipe state signal Kurtx calculated by the monitoring part 340 through Equation 3 above is 12.48.

In this way, the reason why the kurtosis function value Kurtx of the first pipe state signal of FIG. 6C is relatively small and the kurtosis function value Kurty of the second pipe state signal of FIG. 6C is relatively large is that the abnormal state signal is present only in the second pipe state signal and only noise is present in the first pipe state signal but the abnormal state signal is not present in the first pipe state signal in the time period between 1 and 2 second.

The monitoring part 340 may compare the kurtosis function value of each of the first and second pipe state signals with the kurtosis function reference value. Referring to FIG. 8C, the monitoring part 340 may compare the kurtosis function value, 2.91, of the first pipe state signal with the kurtosis function reference value, 3, and compare the kurtosis function value, 12.48, of the second pipe state signal with the kurtosis function reference value, 3.

As a result of the comparison performed by the monitoring part 340, the kurtosis function value of the second pipe state signal is greater than the kurtosis function reference value but the kurtosis function value of the first pipe state signal is less than the kurtosis function reference value, and thus the monitoring part 340 may determine that the abnormal state signal is not present in the first and second pipe state signals received from the two signal acquisition parts 200-1 and 200-2.

As another example, in order to determine whether the abnormal state signal is present in each of the pipe state signals received from the two signal acquisition parts 200-1 and 200-2, the monitoring part 340 may calculate a geometric mean value of the kurtosis function values, that is, a geometric mean value of the kurtosis function value Kurtx of the first pipe state signal and the kurtosis function value Kurty of the second pipe state signal. Here, a geometric mean value GeoM of two kurtosis function values may be calculated through Equation 4 below.

Equation 4

$$GeoM = \sqrt{Kurtx^2 + Kurty^2}$$

In the example of FIG. 8A, the monitoring part 340 may substitute 13.16 as the kurtosis function value Kurtx of the first pipe state signal and 2.98 as the kurtosis function value Kurty of the second pipe state signal into Equation 4 above to calculate a geometric mean value of the kurtosis function values as 13.49.

A kurtosis function geometric mean reference value may be preset in the monitoring part 340. Here, the kurtosis function geometric mean reference value may be a minimum value of the geometric mean of the kurtosis function values that can be calculated when each of the first sensor part 100-1 and the second sensor part 100-2 detects the pipe state signal including the abnormal state signal. For example, assuming that a minimum value of the kurtosis function values that can be calculated when the sensor part detects the pipe state signal including the abnormal state signal is 12, a geometric mean value of the kurtosis function values calculated when substituting the values into Equation 4 as Kurtx and Kurty is about 17. Accordingly, 17 may be preset as the kurtosis function geometric mean reference value in the monitoring part 340.

The monitoring part 340 may compare the geometric mean value of the kurtosis function values with the kurtosis function geometric mean reference value. When the geometric mean value of the kurtosis function values is greater than or equal to the kurtosis function geometric mean reference value, the monitoring part 340 may determine that the abnormal state signal is present in each of the first and second pipe state signals received from the two signal acquisition parts 200-1 and 200-2. In contrast, when the geometric mean value of the kurtosis function values is less than the kurtosis function reference value, the monitoring part 340 may determine that the abnormal state signal is not present in the first and second pipe state signals received from the two signal acquisition parts 200-1 and 200-2.

In the case of FIG. 8A, the monitoring part 340 may compare the geometric mean value, 13.49, of the kurtosis function values with the geometric mean reference value, 17, of the kurtosis function. As a result of the comparison performed by the monitoring part 340, the geometric mean value of the kurtosis function values is less than the kurtosis function geometric mean reference value, and thus the monitoring part 340 may determine that the abnormal state signal is not present in the first and second pipe state signals received from the two signal acquisition parts 200-1 and 200-2.

Similarly, the monitoring part 340 may calculate the kurtosis function value Kurtx (=12.82) of the first pipe state signal, the kurtosis function value Kurty (=12.60) of the second pipe state signal in the time period of 0.5 to 1.5 second shown in FIG. 6B, as shown in FIG. 8B, and calculate the geometric mean value of the kurtosis function value Kurtx (=12.82) of the first pipe state signal and the kurtosis function value Kurty (=12.60) of the second pipe state signal as 18.70 through Equation 4 above.

Thereafter, the monitoring part 340 may compare the geometric mean value, 18.70, of the kurtosis function values with the geometric mean reference value, 17, of the kurtosis function. As a result of the comparison performed by the monitoring part 340, the geometric mean value of the kurtosis function values is greater than or equal to the kurtosis function geometric mean reference value, and thus the monitoring part 340 may determine that the abnormal state signal is present in each of the first and second pipe state signals received from the two signal acquisition parts 200-1 and 200-2.

Further, the monitoring part 340 may calculate the kurtosis function value Kurtx (=2.91) of the first pipe state signal and the kurtosis function value Kurty (=12.48) of the second pipe state signal in the time period of 1 to 2 second shown in FIG. 6C, as shown in FIG. 8C, and calculate the geometric mean value of the kurtosis function value Kurtx (=2.91) of the first pipe state signal and the kurtosis function value Kurty (=12.48) of the second pipe state signal as 12.81 through Equation 4 above.

Thereafter, the monitoring part 340 may compare the geometric mean value, 12.81, of the kurtosis function values with the geometric mean reference value, 17, of the kurtosis function. As a result of the comparison performed by the monitoring part 340, the geometric mean value of the kurtosis function values is less than the kurtosis function geometric mean reference value, and thus the monitoring part 340 may determine that the abnormal state signal is not present in the first and second pipe state signals received from the two signal acquisition parts 200-1 and 200-2.

The method in which the monitoring part 340 determines whether the abnormal state signal is present in each of the first and second pipe state signals received from any two signal acquisition parts 200-1 and 200-2 among the plurality of signal acquisition parts 200 in each of the plurality of time periods using any one of the coherence function value and the kurtosis function value has been described above.

However, the monitoring part 340 may use both the coherence function value and the kurtosis function value in determining whether the abnormal state signal is present in each of the first and second pipe state signals, and in this case, the monitoring part 340 may more accurately determine whether the pipe 10 is abnormal.

More specifically, the monitoring part 340 may calculate the coherence function value representing the degree of similarity between the first and second pipe state signals received from any two signal acquisition parts 200-1 and 200-2 among the plurality of signal acquisition parts 200 in each of the plurality of time periods, and in addition, the monitoring part 340 may calculate the kurtosis function value of each of the first and second pipe state signals received from the two signal acquisition parts 200-1 and 200-2 in each of the plurality of time periods.

When the coherence function value is greater than or equal to the coherence function reference value preset in the monitoring part 340 and each kurtosis function value is greater than the kurtosis function reference value preset in the monitoring part 340, the monitoring part 340 may determine that the abnormal state signal is present in each of the first and second pipe state signals received from the two signal acquisition parts 200-1 and 200-2.

In contrast, when the coherence function value is less than the coherence function reference value or at least one of the kurtosis function values is less than or equal to the kurtosis function reference value, the monitoring part 340 may determine that the abnormal state signal is not present in the first and second pipe state signals received from the two signal acquisition parts 200-1 and 200-2.

As another example, when the coherence function value is greater than or equal to the coherence function reference value preset in the monitoring part 340 and the geometric mean value of the kurtosis function values is greater than or equal to the kurtosis function geometric mean reference value preset in the monitoring part 340, the monitoring part 340 may determine that the abnormal state signal is present in each of the first and second pipe state signals received from the two signal acquisition parts 200-1 and 200-2.

In contrast, when the coherence function value is less than the coherence function reference value or the geometric mean value of the kurtosis function values is less than the kurtosis function geometric mean reference value, the monitoring part 340 may determine that the abnormal state signal is not present in the first and second pipe state signals received from the two signal acquisition parts 200-1 and 200-2.

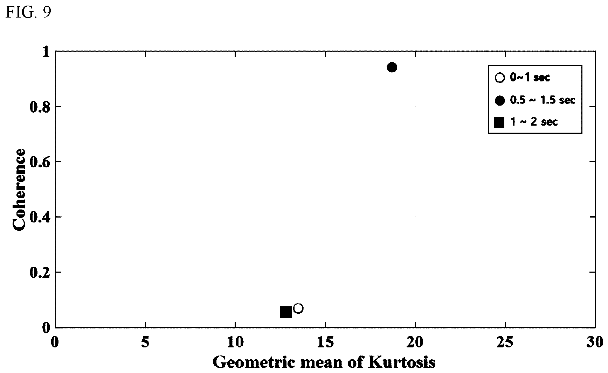

FIG. 9 is a graph showing coherence function values between the first and second pipe state signals of FIGS. 6A to 6C and geometric mean values of kurtosis function values of the first and second pipe state signals of FIGS. 6A to 6C.

According to FIG. 9, it can be seen that coherence function values between the first and second pipe state signals in a time period of 0 to 1 second and a time period of 1 to 2 second are smaller than a coherence function value between the first and second pipe state signals in a time period of 0.5 to 1.5 second. Further, it can be seen that geometric mean values of the kurtosis function values of the first and second pipe state signals in the time period of 0 to 1 second and the time period of 1 to 2 second are smaller than a geometric mean value of the kurtosis function values of the first and second pipe state signals in the time period of 0.5 to 1.5 second. This is because the abnormal state signals are present in both the first and second pipe state signals only in the time period of 0.5 to 1.5 second among the time period of 0 to 2 second.

The presence of the abnormal state signal only in any one of the first and second pipe state signals means that no abnormality has occurred in the pipe 10 at least between points at which two sensor parts 100-1 and 100-2 are positioned. Therefore, in determining whether the abnormal state signal is present in each of the first and second pipe state signals, when the monitoring part 340 uses both the coherence function value and the kurtosis function value, the monitoring part 340 may more accurately determine whether the pipe 10 is abnormal, as well as more accurately monitor the points at which an abnormality occurs in the pipe 10.

As described above, while the present invention has been described with reference to specific embodiments and drawings, the present invention is not limited to the above embodiments, and various modifications and alterations may be made by those skilled in the art to which the present invention pertains from the above description. For example, although the coherence function value and the kurtosis function value have been described as being calculated by a specific method, the calculation of these function values may be calculated by another method without limitation. For example, while the geometric mean value of the kurtosis function values has been used in determining that the abnormal state signal is present in the pipe state signal, this is only one of the exemplary embodiments, and an arithmetic mean value or a harmonic mean value of the kurtosis function values may be used. Further, although the coherence function reference value, the kurtosis function reference value, and the kurtosis function geometric mean reference value have been described as specific values, these reference values may also be changed without limitation. Therefore, the technical spirit of the present invention should be grasped only by the appended claims, and encompasses all modifications and equivalents that fall within the scope of the appended claims.

**Claims**

1. A system for monitoring an abnormal state of pipe comprising:

    a plurality of sensor parts positioned at a distance apart from each other and each configured to detect a pipe state signal, which is a signal indicating a state of the pipe;
    a plurality of signal acquisition parts positioned at a distance apart from each other and each configured to acquire the pipe state signal detected by each of the sensor parts; and
    a device for monitoring an abnormal state of pipe configured to monitor whether the pipe is abnormal,
    wherein the device for monitoring an abnormal state of pipe includes an input part that receives the pipe state signal from each of the plurality of signal acquisition parts,
    a signal division part that divides the pipe state signal input through the input part into a plurality of preset time periods, and
    a monitoring part that determines whether an abnormal state signal is present in each of the pipe state signals received from two signal acquisition parts among the plurality of signal acquisition parts in each of the plurality of time periods and, when it is determined that the abnormal state signal is present in each of the pipe state signals received from the two signal acquisition parts, determines that the pipe is abnormal.

2. The system for monitoring an abnormal state of pipe of claim 1, wherein each of the signal acquisition parts receives a Global Positioning System (GPS) signal through a GPS antenna and matches the GPS signal with the pipe state signal detected by each of the sensor parts,

    the input part receives the pipe state signal matched with the GPS signal from each of the signal acquisition parts, and
    the device for monitoring an abnormal state of pipe further includes a synchronization part that performs time synchronization between the pipe state signals received from each of the signal acquisition parts using the pipe state signal matched with the GPS signal.

3. The system for monitoring an abnormal state of pipe of claim 2, wherein the synchronization part is configured to linearly interpolate the GPS signal and match the linearly interpolated GPS signal with the pipe state signal received from each of the signal acquisition part, and

    performs time synchronization between the pipe state signals received from each of the signal acquisition parts further using the pipe state signal matched with the linearly interpolated GPS signal.

4. The system for monitoring an abnormal state of pipe of claim 1, wherein an overlapping time period is present between the plurality of preset time periods.

5. The system for monitoring an abnormal state of pipe of claim 1, wherein the monitoring part calculates a coherence function value representing a degree of similarity between the pipe state signals received from the two signal acquisition parts in each of the plurality of time periods, and

when the coherence function value is greater than or equal to a coherence function reference value preset in the monitoring part, determines that the abnormal state signal is present in each of the pipe state signals received from the two signal acquisition parts.

6. The system for monitoring an abnormal state of pipe of claim 1, wherein the monitoring part calculates a kurtosis function value of each of the pipe state signals received from the two signal acquisition parts in each of the plurality of time periods, and
when each kurtosis function value is greater than a kurtosis function reference value preset in the monitoring part, determines that the abnormal state signal is present in each of the pipe state signals received from the two signal acquisition parts.

7. The system for monitoring an abnormal state of pipe of claim 1, wherein the monitoring part calculates a kurtosis function value of each of the pipe state signals received from the two signal acquisition parts in each of the plurality of time periods, and
when a geometric mean value of the respective kurtosis function values is greater than or equal to a kurtosis function geometric mean reference value preset in the monitoring part, determines that the abnormal state signal is present in each of the pipe state signals received from the two signal acquisition parts.

8. The system for monitoring an abnormal state of pipe of claim 1, wherein the monitoring part calculates a coherence function value representing a degree of similarity between the pipe state signals received from the two signal acquisition parts in each of the plurality of time periods,

   calculates a kurtosis function value of each of the pipe state signals received from the two signal acquisition parts in each of the plurality of time periods, and
   when the coherence function value is greater than or equal to a coherence function reference value preset in the monitoring part and each kurtosis function value is greater than a kurtosis function reference value preset in the monitoring part, determines that the abnormal state signal is present in each of the pipe state signals received from the two signal acquisition parts.

9. The system for monitoring an abnormal state of pipe of claim 1, wherein the monitoring part calculates a coherence function value representing a degree of similarity between the pipe state signals received from the two signal acquisition parts in each of the plurality of time periods,

   calculates a kurtosis function value of each of the pipe state signals received from the two signal acquisition parts in each of the plurality of time periods, and
   when the coherence function value is greater than or equal to a coherence function reference value preset in the monitoring part and a geometric mean value of the respective kurtosis function values is greater than or equal to a kurtosis function geometric mean reference value preset in the monitoring part, determines that the abnormal state signal is present in each of the pipe state signals received from the two signal acquisition parts.

10. A device for monitoring an abnormal state of pipe comprising:

   an input part configured to receive a pipe state signal, which is a signal indicating a state of the pipe, from each of a plurality of signal acquisition parts;
   a signal division part configured to divide the pipe state signal input through the input part into a plurality of preset time periods; and
   a monitoring part configured to determine whether an abnormal state signal is present in each of the pipe state signals received from two signal acquisition parts among the plurality of signal acquisition parts in each of the plurality of time periods and when it is determined that the abnormal state signal is present in each of the pipe state signals received from the two signal acquisition parts, determine that the pipe is abnormal.

11. A method for monitoring an abnormal state of pipe comprising:

   a signal inputting operation of receiving a pipe state signal, which is a signal indicating a state of the pipe, from each of a plurality of signal acquisition parts;
   a signal division operation of dividing the pipe state signal input through the signal inputting operation into a plurality of preset time periods; and
   a monitoring operation of determining whether an abnormal state signal is present in each of the pipe state signals received from two signal acquisition parts among the plurality of signal acquisition parts in each of the plurality of time periods and when it is determined that the abnormal state signal is present in each of the pipe state signals received from the two signal acquisition parts, determining that the pipe is abnormal.

12. The method for monitoring an abnormal state of pipe of claim 11, wherein, in the signal inputting operation, the pipe state signal matched with a Global Positioning System (GPS) signal is received from each signal acquisition part, and the method for monitoring an abnormal state of pipe further includes, after the signal inputting operation and before the signal division operation, a synchronization operation of performing time synchronization between the pipe state signals received from the respective signal acquisition parts using the pipe state signal matched with the GPS signal.

13. The method for monitoring an abnormal state of pipe of claim 12, wherein, in the synchronization operation, the GPS signal is linearly interpolated and the linearly interpolated GPS signal is matched with the pipe state signal received from each signal acquisition part, and
the time synchronization is performed between the pipe state signals received from the respective signal acquisition parts further using the pipe state signal matched with the linearly interpolated GPS signal.

14. The method for monitoring an abnormal state of pipe of claim 11, wherein an overlapping time period is present between the plurality of preset time periods.

15. The method for monitoring an abnormal state of pipe of claim 11, wherein, in the monitoring operation, a coherence function value representing a degree of similarity between the pipe state signals received from the two signal acquisition parts is calculated in each of the plurality of time periods, and
when the coherence function value is greater than or equal to a preset coherence function reference value, it is determined that the abnormal state signal is present in each of the pipe state signals received from the two signal acquisition parts.

16. The method for monitoring an abnormal state of pipe of claim 11, wherein, in the monitoring operation, a kurtosis function value of each of the pipe state signals received from the two signal acquisition parts is calculated in each of the plurality of time periods, and
when each kurtosis function value is greater than a preset kurtosis function reference value, it is determined that the abnormal state signal is present in each of the pipe state signals received from the two signal acquisition parts.

17. The method for monitoring an abnormal state of pipe of claim 11, wherein, in the monitoring operation, a kurtosis function value of each of the pipe state signals received from the two signal acquisition parts is calculated in each of the plurality of time periods, and
when each of a geometric mean value of the respective kurtosis function values is greater than or equal to a preset kurtosis function geometric mean reference value, it is determined that the abnormal state signal is present in each of the pipe state signals received from the two signal acquisition parts.

18. The method for monitoring an abnormal state of pipe of claim 11, wherein, in the monitoring operation, a coherence function value representing a degree of similarity between the pipe state signals received from the two signal acquisition parts is calculated in each of the plurality of time periods,

a kurtosis function value of each of the pipe state signals received from the two signal acquisition parts is calculated in each of the plurality of time periods, and
when the coherence function value is greater than or equal to a preset coherence function reference value and each kurtosis function value is greater than a preset kurtosis function reference value, it is determined that the abnormal state signal is present in each of the pipe state signals received from the two signal acquisition parts.

19. The method for monitoring an abnormal state of pipe of claim 11, wherein, in the monitoring operation, a coherence function value representing a degree of similarity between the pipe state signals received from the two signal acquisition parts is calculated in each of the plurality of time periods,

a kurtosis function value of each of the pipe state signals received from the two signal acquisition parts is calculated in each of the plurality of time periods, and
when the coherence function value is greater than or equal to a preset coherence function reference value and a geometric mean value of the respective kurtosis function values is greater than or equal to a preset kurtosis function geometric mean reference value, it is determined that the abnormal state signal is present in each of the pipe state signals received from the two signal acquisition parts.

FIG. 1

FIG. 2

```
                          ┌─────────────┐
                          │    START    │
                          └─────────────┘
                                 │
                                 ▼
        ┌────────────────────────────────────────────┐
        │   RECEIVE PIPE STATE SIGNAL FROM EACH OF    │── S100
        │   PLURALITY OF SIGNAL ACQUISITION PARTS     │
        └────────────────────────────────────────────┘
                                 │
                                 ▼
        ┌────────────────────────────────────────────┐
        │  PERFORM TIME SYNCHRONIZATION BETWEEN       │
        │     PIPE STATE SIGNALS RECEIVED FROM        │── S200
        │  RESPECTIVE SIGNAL ACQUISITION PARTS USING  │
        │  PIPE STATE SIGNALS MATCHED WITH GPS SIGNAL  │
        └────────────────────────────────────────────┘
                                 │
                                 ▼
        ┌────────────────────────────────────────────┐
        │   DIVIDE PIPE STATE SIGNAL RECEIVED FROM    │
        │     EACH SIGNAL ACQUISITION PART INTO       │── S300
        │    PLURALITY OF PRESET TIME PERIODS         │
        └────────────────────────────────────────────┘
                                 │
                                 ▼
                      ╱─────────────────────╲
              NO     ╱    IS ABNORMAL STATE   ╲
        ◀───────────   SIGNAL PRESENT IN TWO PIPE   ─── S400
                      ╲    STATE SIGNALS?     ╱
                       ╲─────────────────────╱
                                 │ YES
                                 ▼
        ┌────────────────────────────────────────────┐
        │      DETERMINE THAT PIPE IS ABNORMAL        │
        └────────────────────────────────────────────┘
                                 │
                                 ▼
                          ┌─────────────┐
                          │     END     │
                          └─────────────┘
```

FIG. 3a

FIG. 3b

FIG. 3c

FIG. 3d

| Index [n] | LINEARLY INTERPOLATED FIRST GPS SIGNAL | FIRST PIPE STATE SIGNAL | LINEARLY INTERPOLATED SECOND GPS SIGNAL | SECOND PIPE STATE SIGNAL |
|---|---|---|---|---|
| 1 | 1552543166103510800 | 0.000155449 | 1552543166103413175 | 0.000400543 |
| 2 | 1552543166103530300 | 0.000338554 | 1552543166103432675 | 0.00048542 |
| 3 | 1552543166103549800 | 0.000502586 | 1552543166103452175 | 0.000329018 |
| 4 | 1552543166103569425 | 0.000571251 | 1552543166103471675 | 0.00032711 |
| 5 | 1552543166103588925 | 0.000601768 | 1552543166103491300 | 0.000311852 |
| 6 | 1552543166103608425 | 0.000617027 | 1552543166103510800 | 0.000371933 |
| 7 | 1552543166103627925 | 0.000614166 | 1552543166103530300 | 0.000178337 |
| 8 | 1552543166103647550 | 0.000443459 | 1552543166103549800 | -0.000041007 |
| 9 | 1552543166103667050 | 0.000502586 | 1552543166103569425 | 0.000037193 |
| 10 | 1552543166103686550 | 0.000460625 | 1552543166103588925 | 0.000151634 |
| 11 | 1552543166103706050 | 0.000548363 | 1552543166103608425 | 0.000163078 |
| 12 | 1552543166103725675 | 0.000534058 | 1552543166103627925 | 0.000324249 |
| 13 | 1552543166103745175 | 0.000489235 | 1552543166103647550 | 0.000275612 |
| 14 | 1552543166103764675 | 0.000278473 | 1552543166103667050 | 0.000165939 |
| 15 | 1552543166103784175 | 0.000320435 | 1552543166103686550 | 0.000374794 |
| 16 | 1552543166103803800 | 0.000031471 | 1552543166103706050 | 0.000535965 |

FIG. 4

FIG. 5

FIG. 6a

FIG. 6b

FIG. 6c

FIG. 7a

Cross Power Spectral Density

Coherence Function

FIG. 7b

Cross Power Spectral Density

Coherence Function

FIG. 7c

Cross Power Spectral Density

Coherence Function

FIG. 8a

Histogram of Sensor 1

**Kurtosis : 13.16**

Histogram of Sensor 2

**Kurtosis : 2.98**

FIG. 8b

Histogram of Sensor 1

Kurtosis : 12.82

Histogram of Sensor 2

Kurtosis : 12.60

FIG. 8c

Histogram of Sensor 1

Kurtosis : 2.91

Histogram of Sensor 2

Kurtosis : 12.48

FIG. 9

## INTERNATIONAL SEARCH REPORT

| International application No. |
|---|
| **PCT/KR2021/011431** |

**A. CLASSIFICATION OF SUBJECT MATTER**

F17D 5/06(2006.01)i; G01M 3/24(2006.01)i; G06Q 50/10(2012.01)i; G01S 19/01(2010.01)i

According to International Patent Classification (IPC) or to both national classification and IPC

**B. FIELDS SEARCHED**

Minimum documentation searched (classification system followed by classification symbols)

F17D 5/06(2006.01); G01F 1/32(2006.01); G01F 1/74(2006.01); G01H 17/00(2006.01); G01M 13/00(2006.01); G01M 19/00(2006.01); G01M 3/24(2006.01); G06Q 50/06(2012.01); G06Q 50/10(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배관(pipe), 이상상태(abnormal state), 모니터링(monitoring), 센서(sensor), 신호분할(signal division), GPS, 중첩(overlapping)

**C. DOCUMENTS CONSIDERED TO BE RELEVANT**

| Category* | Citation of document, with indication, where appropriate, of the relevant passages | Relevant to claim No. |
|---|---|---|
| X | KR 10-1876730 B1 (DAE EUN ELETRICAL CO., LTD.) 09 August 2018 (2018-08-09) See paragraphs [0028], [0030], [0034]-[0047], [0051] and [0099]-[0101] and figure 1. | 1-3,5,10-13,15 |
| Y | | 6-9,16-19 |
| A | | 4,14 |
| Y | JP 2006-153760 A (OSAKA PREFECTURE) 15 June 2006 (2006-06-15) See paragraphs [0006] and [0008] and claim 1. | 6-9,16-19 |
| A | EP 2208981 B1 (ALCATEL LUCENT) 23 March 2016 (2016-03-23) See paragraph [0034]. | 1-19 |
| A | KR 10-2020-0030902 A (DOORIINO CO., LTD. et al.) 23 March 2020 (2020-03-23) See paragraphs [0022]-[0034] and figures 1-3. | 1-19 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 November 2021** | **16 November 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2021/011431** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2012-520444 A (ENDRESS+HAUSER FLOWTEC AG.) 06 September 2012 (2012-09-06)<br>　　　See paragraphs [0072]-[0074] and figures 1-2. | 1-19 |
| PX | KR 10-2238436 B1 (KOREA RESEARCH INSTITUTE OF STANDARDS AND SCIENCE) 09 April 2021 (2021-04-09)<br>　　　See claims 1-3, 5-13 and 15-19 and figures 1-9.<br>　　　This document is a published earlier application that serves as a basis for claiming priority of the present international application. | 1-19 |

Form PCT/ISA/210 (second sheet) (July 2019)

**INTERNATIONAL SEARCH REPORT**
Information on patent family members

International application No.

**PCT/KR2021/011431**

| Patent document cited in search report | | | Publication date (day/month/year) | Patent family member(s) | | | Publication date (day/month/year) |
|---|---|---|---|---|---|---|---|
| KR | 10-1876730 | B1 | 09 August 2018 | None | | | |
| JP | 2006-153760 | A | 15 June 2006 | None | | | |
| EP | 2208981 | B1 | 23 March 2016 | EP | 2208981 | A1 | 21 July 2010 |
| KR | 10-2020-0030902 | A | 23 March 2020 | None | | | |
| JP | 2012-520444 | A | 06 September 2012 | CN | 102348958 | A | 08 February 2012 |
| | | | | CN | 102348958 | B | 01 October 2014 |
| | | | | DE | 102009001525 | A1 | 16 September 2010 |
| | | | | EP | 2406585 | A2 | 18 January 2012 |
| | | | | JP | 5355724 | B2 | 27 November 2013 |
| | | | | US | 2011-0314929 | A1 | 29 December 2011 |
| | | | | US | 8844371 | B2 | 30 September 2014 |
| | | | | WO | 2010-103005 | A2 | 16 September 2010 |
| | | | | WO | 2010-103005 | A3 | 02 December 2010 |
| KR | 10-2238436 | B1 | 09 April 2021 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101447928